(19) Europäisches Patentamt / European Patent Office / Office européen des brevets

(11) **EP 3 937 157 B1**

(12) **EUROPÄISCHE PATENTSCHRIFT**

(45) Veröffentlichungstag und Bekanntmachung des Hinweises auf die Patenterteilung:
**24.04.2024   Patentblatt 2024/17**

(21) Anmeldenummer: **21192123.4**

(22) Anmeldetag: **29.07.2016**

(51) Internationale Patentklassifikation (IPC):
**G09B 23/30** *(2006.01)*

(52) Gemeinsame Patentklassifikation (CPC):
**G09B 23/30; G09B 23/306**

(54) **VERFAHREN ZUR REPRODUZIERBAREN ERZEUGUNG VON DEFINIERTEN KNOCHENFRAKTUREN**

METHOD FOR REPRODUCIBLE PRODUCTION OF DEFINED BONE FRACTURES

PROCÉDÉ DE PRODUCTION REPRODUCTIBLE DE FRACTURES OSSEUSES DÉFINIES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.01.2022   Patentblatt 2022/02**

(60) Teilanmeldung:
**23200419.2 / 4 276 800**

(62) Dokumentnummer(n) der früheren Anmeldung(en) nach Art. 76 EPÜ:
**16753848.7 / 3 491 635**

(73) Patentinhaber: **Rimasys GmbH**
**50829 Köln (DE)**

(72) Erfinder:
• **Holz, Robert**
  **50829 Köln (DE)**
• **Ebinger, Marc**
  **50829 Köln (DE)**

(74) Vertreter: **Meinken, Claudia**
**MZPatent**
**Königsallee 27**
**40212 Düsseldorf (DE)**

(56) Entgegenhaltungen:
• **Robert Holz: "Der Mechanismus der Essex-Lorpresti: Untersuchung des Gewebeversagens unter Verwendung eines neu entwickelten Simulators", Masterarbeit, 1. September 2012 (2012-09-01), XP055680819, Köln Gefunden im Internet: URL:https://aleph.zbsport.de/F/KDJQ3I8A7PT UH4Q4JET34B52QL4U8PHM6JRXAYPHI1MBL9 PFVG-04 879?func=full-set-set&set_number=001854&se t_entry=000001&format=999 [gefunden am 2020-03-30]**
• **Marc Ebinger: "Design and evaluation of a novel simulator for high-speed injuries of the human forearm", Masterthesis, 1. Januar 2013 (2013-01-01), XP055680824, Köln Gefunden im Internet: URL:https://aleph.zbsport.de/F/KDJQ3I8A7PT UH4Q4JET34B52QL4U8PHM6JRXAYPHI1MBL9 PFVG-05 047?func=find-acc&acc_sequence=002312817 [gefunden am 2020-03-30]**
• **Dieter Fink: "Konzeption und Erstellung eines Softwarepakets zur Synchronisation, Datenerfassung und Meßsignaldarstellung zum Simulator der Essex Lopresti", Masterthesis, 1. Januar 2012 (2012-01-01), XP055680821, Köln Gefunden im Internet: URL:https://aleph.zbsport.de/F/KDJQ3I8A7PT UH4Q4JET34B52QL4U8PHM6JRXAYPHI1MBL9 PFVG-04 386?func=find-acc&acc_sequence=002290934 [gefunden am 2020-03-30]**

- **KILIAN WEGMANN ET AL: "Sequence of the Essex-Lopresti lesion—a high-speed video documentation and kinematic analysis", ACTA ORTHOPAEDICA, Bd. 85, Nr. 2, 20. April 2014 (2014-04-20) , Seiten 177-180, XP055319450, GB ISSN: 1745-3674, DOI: 10.3109/17453674.2014.887952**
- **JOSEPH C MCGINLEY ET AL: "Forearm and Elbow Injury: The influence of rotational position", THE JOURNAL OF BONE AND JOINT SURGERY, Bd. 85, Nr. 12, 1. Dezember 2003 (2003-12-01), Seiten 2403-2409, XP055680828, DOI: 10.2106/00004623-200312000-00019**

**Beschreibung**

Gegenstand der Erfindung ist ein Verfahren zur reproduzierbaren Erzeugung von definierten Knochenfrakturen mit begleitenden Weichteilverletzungen in Präparaten, insbesondere in Humanpräparaten, Vorrichtungen zur Anwendung des Verfahrens sowie die mit Hilfe des Verfahrens erzeugten Präparate, insbesondere Humanpräparate, die durch eine definierte Knochenfraktur mit begleitenden Weichteilverletzungen gekennzeichnet sind, wobei die definierte Knochenfraktur eine distale Radiusfraktur ist. Die mit dem erfindungsgemäßen Verfahren erzeugten Präparate, insbesondere Humanpräparate sind für die Schulung, Aus- und Weiterbildung von medizinischem Personal, für die Entwicklung und Validierung von medizinischen Geräten, Implantaten und Prothesen, für Unfallanalysen und Gutachten anwendbar.

In der chirurgischen Aus- und Weiterbildung gibt es zertifizierte Kurse in denen das praktische Operieren geübt wird, wobei in den Praxisanteilen Kunstknochen oder intakte, unverletzte Humanpräparate als "Übungspatienten" dienen. Dadurch besteht eine große Diskrepanz zwischen der Situation in den Fortbildungskursen und der Realität im Operationssaal. Die Mehrzahl der Operationsmethoden kann deshalb nur theoretisch besprochen werden.

Kunstknochen besitzen nicht die gleichen biomechanischen Eigenschaften wie menschliche Knochen. Das bedeutet, dass z.B. Schrauben einen ganz anderen Halt in Kunstknochen im Vergleich zu humanen Knochen bieten. Ebenso spielen die unterschiedlichen Knochenqualitäten von Patienten im klinischen Alltag eine große Rolle für die Art der Versorgung. So hängt die Wahl der einzusetzenden Implantate maßgeblich von der genetischen und altersbedingten Knochenqualität, sowie der inhomogenen Struktur des Knochens selbst ab. Kunstknochen vermögen diese Unterschiede nicht adäquat darzustellen. Aus diesem Gründen kann der Umgang mit unterschiedlichen Medizintechnikprodukten wie Osteosynthese-Materialien, Schrauben und Implantaten, oder Arbeitsvorgänge wie das Bohren und Fräsen mit Hilfe von Kunstknochen nicht hinreichend geübt werden. Ein weiterer Nachteil besteht darin, dass die Weichteile (Haut, subkutanes Gewebe, Muskeln, etc.) in den bisherigen Kursangeboten nicht berücksichtigt werden. Es wird am "nackten" Knochen operiert und der Umgang mit den Weichteilen, der entscheidend für das postoperative Ergebnis ist, kann mit dieser Methode nicht vermittelt werden.

Deshalb werden Aus- und Weiterbildungskurse angeboten, bei denen die praktischen Anteile am Humanpräparat durchgeführt werden. An Humanpräparaten kann zwar mit erhaltenem Weichteilmantel operiert werden, allerdings sind die Knochen und die umgebenden Weichteile dabei unversehrt. Osteosynthese Materialien können nur am unversehrten Knochen angebracht werden. Für fortgeschrittene Ärzte ist dies trivial. Der Anspruch dieser Weiterbildung kann aus diesem Grund als mangelhaft angesehen werden. Bislang gibt es keine Präparate mit realitätsnahen Knochenfrakturen, d.h. Knochenfrakturen mit begleitenden Weichteilverletzungen wie sie bei realen Unfällen entstehen. Eine realitätsnahe Aus- und Weiterbildung mit realitätsnahen Knochenfrakturen und realitätsnahen Weichteilverletzung ist derzeit nicht möglich.

In der Praxis wird versucht, das Problem der nicht vorhandenen Knochenfraktur in Humanpräparaten durch direkte, invasive Krafteinwirkung auf das Präparat zu kompensieren. Die Knochenfrakturen werden von den Teilnehmern selbst mit Werkzeugen wie Säge, Meißel, Hammer oder chirurgischen Instrumenten an den Humanpräparaten erzeugt. Dabei muss auf das Präparat eine hohe Energie aufgebracht werden. Die aktuelle Praxis führt zu Kollateralschäden am Präparat und einer mangelhaften Qualität sowohl der dadurch erzeugten Knochenfrakturen als auch der den Knochen umgebenden Weichteile. Durch diese direkte Krafteinleitung kann zwar das Zielgebiet meist zielsicher unter Sicht angesteuert werden, aber Richtung der eingeleiteten Kraft stimmt nicht mit der Wirkungslinie bei einem realen Unfallmechanismus überein. Durch die direkte Krafteinwirkung wird der Weichteilmantel geöffnet und die den Knochen umgebenden Weichteile werden massiv und realitätsfern geschädigt. Die auf diese Weise entstehenden Knochenfrakturen entsprechen deshalb nicht denen bei realen, durch indirekte Krafteinwirkung entstehenden Knochenfrakturen. Insbesondere unterscheiden sie sich hinsichtlich ihrer Geometrie und der Beschaffenheit der beteiligten Knochenfragmente von den bei einem realen Unfall entstehenden typischen Frakturmustern. Außerdem werden keine typischen begleitenden Ligamentärverletzungen (an Kapseln, Bändern und Sehnen) erzeugt. Die manuelle Krafteinwirkung mit Werkzeugen aus nicht standardisierten Höhen und Winkeln führt dabei zu unterschiedlichen Ergebnissen am Präparat und ist nicht standardisiert. Die Individualität der Präparate in Morphologie und Geometrie bleibt unberücksichtigt.

Bei den anderen im Stand der Technik bekannten Verfahren handelt es sich um einfache physikalische Experimente bei denen hohe Energien in Präparate geleitet werden. Die Fragestellungen befassten sich stets damit, wie eine Verletzung entsteht oder wie Präparate reagieren, wenn sie einem möglichen Verletzungsmechanismus in einem praktischen Versuch ausgesetzt werden.

Amis, A. und Miller, J. (1995), Injury Vol. 26, No. 3: 163-168 untersuchte die Entstehung von Ellenbogenfrakturen an 40 Präparaten, bei denen der Knochen von subkutanem Weichteilgewebe umgeben war. Der Knochen wurde an einem Ende freipräpariert, in Polymethacrylat-Knochenzement eingegossen, an einer Masse mit 60 kg befestigt und an zwei Stäben beweglich horizontal aufgehängt. Die Masse von 60 kg sollte dabei die Trägheitseigenschaften des menschlichen Rumpfes simulieren. Die Verletzungen im Präparat wurden mittels eines auslenkbaren Pendels mit einer Masse von 20 kg erzeugt, dass aus verschiedenen Auslenkungen auf das Präparat auftraf. Der präparierte Humerusschaft wurde über eine winkelverstellbare Vorrichtung derart fixiert, dass die Flexion- und Extensionsbewegung des Ellenbogengelenks in der Bewegungsebene des Pendels lag. Es wurden Kraftstoßversuche bei unterschiedlicher Ellenbogenflexion und Unterarmrotation durchgeführt. Der Ort des initialen Kontaktes des Pendels mit dem Präparat konnte dabei nicht exakt vorgegeben werden, so dass beide Unterarmknochen simultan oder nur einer initial belastet wurde. Mit einer Trefferquote von 37,5 % wurde dabei eine distale Radiusfraktur bei Flexionswinkeln von 0 bis 80 Grad und Kraftstößen von 0,3 bis 6,1 kN erzeugt. Eine Ulna Fraktur wurde mit einer Trefferquote von 32,5 % bei Flexionswinkeln von 60 bis 135 Grad und Kraftstößen von 2,1 bis 6,8 kN erzeugt.

McGinley, J. et al. (2003) The Journal of Bone and Joint Surgery: 2403-2409 positionierten Humanpräparate in vertikaler Position in Bezug auf eine gravitationsbeschleunigte Masse von 27 kg, die aus einer Höhe von 90 cm auf die eingespannten Präparate fallen gelassen wurde. Nach dem Aufprall wurde die Masse von zwei Federn abgebremst, um eine Zerquetschung der Präparate zu verhindern. Dabei wurde bei einer vorgegeben Unterarm Rotation von 2, 4, 6 und 8 Grad (5 +/- 2,6 Grad) in den eingespannten Präparaten eine proximale radiale Fraktur mit begleitender distaler Ulna Fraktur erzeugt. Bei einer vorgegebenen Unterarmrotation von 40, 41, 42, 45, 50 und 53 Grad (44,4 +/- 5,2 Grad) wurde eine isolierte Radiuskopffraktur erzeugt und Essex-Lopresti Frakturen bei vorgegebener Unterarmrotation von 51, 54, 58, 90, 108 und 110 Grad (70 +/- 25,2 Grad). Eine proximale radiale Fraktur mit begleitender distaler Ulna Fraktur wurde in 4 von 20 Präparaten (d.h. Trefferquote 20 %), die isolierte Radiusköpfchenfraktur in 7 von 20 Präparaten (d.h. Trefferquote 35 %) und eine Essex-Lopresti Fraktur in 9 von 20 Präparaten (d.h. Trefferquote 45 %) erzeugt. In den Studien von McGinley et al. wurden die Weichteile des Unterarms zwar unberührt gelassen, dafür aber die Hand vollständig vom Arm abgetrennt. Ein realitätsgetreuer Sturz auf den ausgestreckten Arm konnte deshalb nicht dargestellt werden. Ob die generierten Frakturen denen der Realität entsprechen, wurde nicht überprüft. Eine Vorgabe über Verformung oder die Stauchung der Präparate durch die genutzte Vorrichtung wurde nicht angeführt.

McGinley, J. et al. (2006) Skeletal Radiol. 35: 275-281 untersucht die Verletzungsmuster der IOM (interosseous membrane) in Humanpräparaten.

In Delye, H. et al. (2007) Journal of Neurotrauma 24: 1576-1586 wurden Schädelfrakturen an Schädelpräparaten ohne Weichteilmantel mittels eines mechanischen Pendels, mit einer Masse von 14,3 kg und einer Pendellänge von 128 cm, erzeugt.

Fitzpatrick, M. et al. (2012) J. Orthop Trauma, Vol. 0, No. 0: 1-6 untersuchte Präparate ohne Weichteilmantel, die in sich gedreht, in eine Maschine eingespannt und komprimiert wurden. Die Krafteinwirkung diente der Erprobung der Versagensgrenzen biologischen Materials und simulierte kein reales Unfallgeschehen. Definierte Frakturen wurden nicht erzeugt.

Masouros, S. et al. (2013) Annals of Biomedical Engineering, DOI: 10.1007/s10439-013-0814-6 untersuchte die Wirkung einer Explosion auf die untere Extremität. Dazu wurden Präparate in zwei verschiedenen Positionen (Stand- und Sitzposition) fixiert, wobei der beschuhte Fuß auf dem Deckel eines Druckzylinders befestigt war. In den Zylinder wurde Gas gepumpt, bis der Druck im Inneren des Zylinders so groß war, dass der Deckel explosionsartig nach oben gegen das Präparat beschleunigt wurde. Bei dieser Studie wurden zufällig verschiedene Verletzungen erzeugt, jedoch nicht gezielt definierte Frakturen hergestellt.

Henderson, K. et al. (2013) "Biomechanical Response of the Lower Leg under High Rate Loading" IRCOBI Conference 2013 untersuchte ebenfalls die unteren Extremitäten in Präparaten ohne Weichteilmantel. Dabei werden die Präparate in eine Vorrichtung eingespannt und aus seiner Höhe von 1 bis 2,3 m Massen mit einem Gewicht von 38,5 bis 61,2 kg auf die Präparate fallen gelassen und die erzeugten Frakturen untersucht.

Robert Holz "Der Mechanismus der Essex- Lopresti: Untersuchung des Gewebeversagens unter Verwendung eines neu entwickelten Simulators" (Köln, Deutsche Sporthochschule, Masterarbeit, 2012) verwendete einen Simulator mit gravitationsbeschleunigtem Fallkörper, um die Biomechanik und Verletzungsreihenfolge der Essex-Lopresti Fraktur zu untersuchen. Dazu wurden die Humanpräparate freipräpariert, d.h. Haut und subkutanes Gewebe inklusive der Muskeln entfernt und die Arme bis auf die IOM (interosseous membrane) und die Gelenkkapseln um Ellenbogen und Handgelenk freipräpariert. Holz beschreibt das Ausrichten und Einspannen des Präparats in dem Simulator, die optische Analyse der Frakturerzeugung und die Bestimmung der horizontalen und vertikalen sowie der relativen Bewegung der Segmente bei der Frakturerzeugung. Die Essex-Lopresti Fraktur konnte von Holz in 4 von 30 Fällen, d.h. mit einer Trefferquote von 13,3 %, in Präparaten ohne Weichteilmantel erzeugt werden.

Marc Ebinger "Design and evaluation of a novel simulator for high-speed injuries of the human forearm" (Köln, Deutsche Sporthochschule, Masterarbeit, 2013) offenbart einen Fallprüfstand zur Erzeugung axialer Stoßbelastungen. Dabei dienten piezoelektrische Kraftsensoren zur Aufnahme des Kraftverlaufs. Die Kinematik wurde über drei Hochgeschwindigkeitskameras aufgenommen. Mit dem Prüfstand konnten Essex-Lopresti, Monteggia- und Galeazzi-Verletzungen in Humanpräparaten ohne Weichteilmantel erzeugt und analysiert werden. Ebinger empfiehlt für weitere Arbeiten Adapter zu konstruieren, um die Fixierung der Präparate zu standardisieren, so dass Fehlerquellen durch den Bediener minimiert werden.

Dieter Fink "Konzeption und Erstellung eines Softwarepakets zur Synchronisation, Datenerfassung und Messsignaldarstellung zum Simulator der Essex Lopresti" (Köln, Deutsche Sporthochschule, Masterarbeit, 2012) offenbart die Auswahl geeigneter Messtechnik und Methoden der Auswertung der Messergebnisse zur Aufklärung und Validierung der Verletzungsabfolge bei der Entstehung einer Essex Lopresti an Humanpräparaten.

Wegmann, K. et al. (2014) Acta Orthopaedica; 85 (2): 177-180 untersuchte die Entstehung einer Essex Lopresti an Humanpräparaten ohne Weichteilmantel. Dazu wurden die frei präparierten Knochen mit Markierungen versehen und mit einer Vorrichtung mit gravitationsbeschleunigtem Fallkörper Knochenfrakturen erzeugt. Der Verletzungshergang wurde mit Hochgeschwindigkeitskameras analysiert.

Deborah R. Marth (2002) (Disseration "Biomechanics of the shoulder in lateral impact") untersuchte die Verletzungen an zwölf Ganzkörper-Leichen bei einem Autounfall, wenn ein Aufprall von der Seite erfolgt. Die Leichenpräparate wurden auf einem Stuhl platziert, festgebunden und der Kopf mithilfe eines Flaschenzugsystems angehoben, um eine aufrechte Position des Humanpräparats zu ermöglichen. Beschleunigungsmesser wurden auf dem Präparat an unterschiedlichen anatomischen Eckpunkten befestigt, wobei der Knochen nicht vorbelastet wurde. Der seitliche Kraftstoß wurde mithilfe einer pneumatischen Maschine in Form eines Zylinders (23,4 kg) durchgeführt. Dabei wurde der Mittelpunkt des Zylinders auf das von lateral sichtbare Akromion zentriert. Die Präparate wurden in zwei Gruppen eingeteilt. Eine Gruppe (n=6) erhielt den Kraftstoß mit einer Geschwindigkeit von 4,47 m/s (Gruppe A), die andere (n=6) mit 6,71 m/s (Gruppe B). Zur Auswertung wurden Röntgenbilder aufgenommen und Autopsien durchgeführt. In Gruppe A waren die häufigsten Verletzungen Rippenbrüche. Bei Gruppe B hatten 5 von 6 Präparaten entweder eine Klavikulafraktur (genaue Lokalisation wird nicht genannt) oder eine Akromionfraktur sowie mindestens 4 Rippenbrüche. Bei einer Geschwindigkeit des Zylinders von 5,7 m/s, einer Auftreffkraft von 2916 N und einer Deformationssteifigkeit zwischen Acromion und dem T1-Wirbel von 23%, lag die Wahrscheinlichkeit einer schweren Schulterverletzung (AIS 2+) bei 50%. Kritische Anmerkungen zum Studiendesign wurden hinsichtlich der Treffgenauigkeit des Kraftstoßes in Kombination mit den unterschiedlichen anthropometrischen Merkmalen und Weichteilmassen der Prüfkörper gemacht. Marth konnte beobachten, dass der Schlag nicht immer gleich war, weshalb die Präparate, die dem simulierten Unfallszenario ausgesetzt waren, zufällige Verletzungen aufwiesen.

Die im Stand der Technik erzeugten Knochenfrakturen sind Zufallsprodukte. Es sind keine Verfahren bekannt, mit denen definierte Knochenfrakturen gezielt erzeugt werden können.

Knochenfrakturen lassen sich in definierte Frakturklassen einteilen. Die definierten Knochenfrakturen sind hinsichtlich ihrer Lokalisation und hinsichtlich ihres Frakturmusters gleich beziehungsweise, wenn man die individuellen anatomischen Abweichungen bei den Unfallopfern berücksichtigt, sehr ähnlich. Die definierten Knochenfrakturen sind auch hinsichtlich der begleitenden Weichteilverletzungen bei einzelnen Unfallopfern gleich beziehungsweise sehr ähnlich.

Für die Entwicklung besserer Implantate, Prothesen, Osteosynthese Materialien und die bessere Schulung von medizinischem Personal werden Präparate mit realitätsnahen Knochenfrakturen benötigt. Ärzte, insbesondere Chirurgen, müssen eine gewisse Anzahl von Operationen vorweisen, um ihre Qualifikationen zu erlangen und eigenständig Operationen durchführen zu dürfen. Dies kostet viel Zeit und schadet potentiell durch das "Üben am Patienten" den Patienten selbst. Ärzte nutzen zertifizierte Fortbildungskurse, in denen operative Versorgungen an Humanpräparaten geübt werden. Bislang existieren keine Kurse mit realitätsnahen Knochenfrakturen an den Präparaten.

Bei Humanpräparaten handelt es sich um Körperspenden. Aus ethischen Gründen besteht ein Bedarf an Verfahren, mit denen definierte, realitätsnahe Knochenfrakturen mit einer hohen Trefferquote in den Präparaten erzeugt werden können. Verfahren, mit denen Knochenfrakturen zufällig, mit einer niedrigen Wahrscheinlichkeit erzeugt werden, sind aus ethischen Gründen für eine gewerbliche Nutzung nicht geeignet.

Es besteht deshalb ein großer Bedarf an Verfahren, mit denen definierte Knochenfrakturen gezielt und reproduzierbar in Humanpräparaten hergestellt werden können. Ein großer Bedarf besteht auch an den mit Hilfe der Verfahren erzeugten Humanpräparaten und deren Verwendung für die Aus- und Weiterbildung und für die Medizintechnik Industrie.

Diese Aufgaben werden durch die erfindungsgemäßen Verfahren und Präparate gelöst.

Die Erfindung ist im beigefügten Anspruchssatz beschrieben.

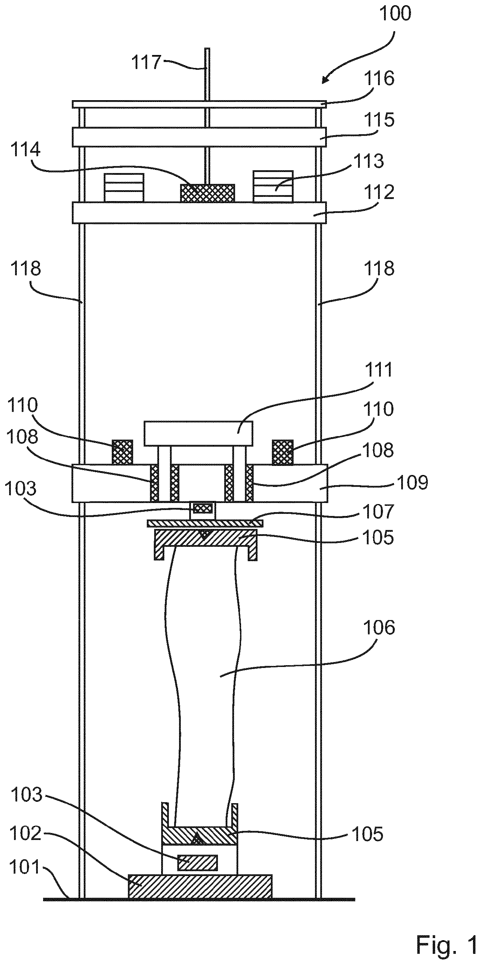

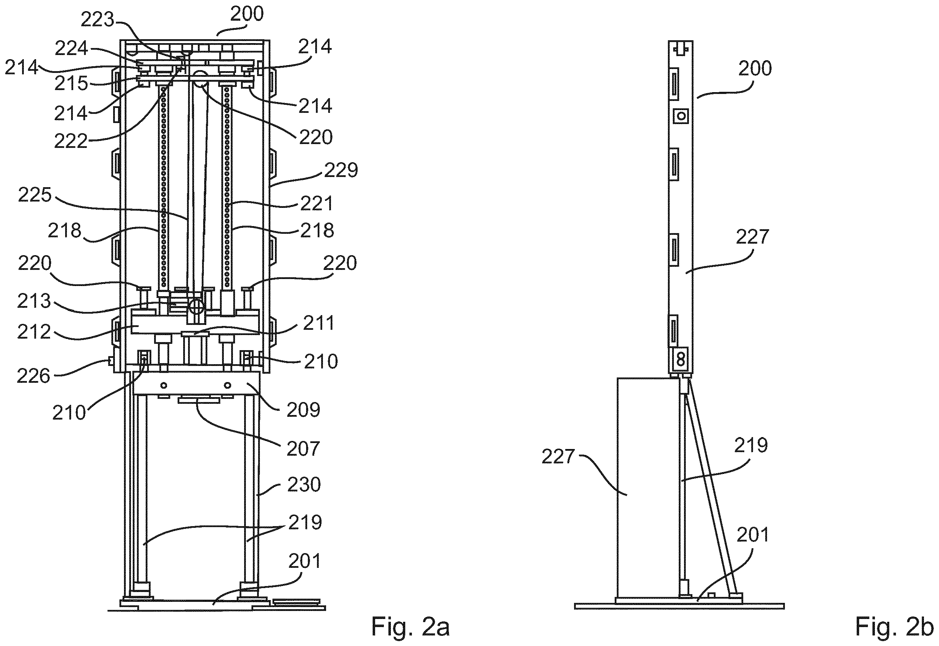

In der erfindungsgemäßen Ausführungsform des Verfahrens wird der Kraftstoß durch Aufprall einer mit definierter Geschwindigkeit in Richtung auf das Präparat bewegten definierten Masse ausgeübt. Das erfindungsgemäße Verfahren kann mittels einer Vorrichtung 100, 200 gemäß Fig. 1 oder Fig. 2 durchgeführt werden. Die definierte Geschwindigkeit wird bei Verwendung einer Vorrichtung 100, 200 mittels einer definierten Fallhöhe eingestellt. Die definierte Stauchung und die definierte Dämpfung können mit Mitteln zum Einstellen der definierten Dämpfung beim Aufprall 110, 210 eingestellt werden.

Die definierte Knochenfraktur kann ausgewählt werden aus distaler Radiusfraktur, distaler Radiusfraktur Extension, distaler Radiusfraktur Flexion, distaler Radiusfraktur Die-punch-Fraktur, distaler Radiusfraktur Chauffeurfraktur.

Das Präparat kann ein Humanpräparat oder ein tierisches Präparat sein. Das Präparat kann ein formalinfixiertes Präparat, ein thielfixiertes Präparat oder aufgetautes Präparat sein.

Die definierte Masse hat ein Gewicht von 16,6 kg bis 23,1 kg. Die definierte Masse wird in axialer Richtung, vorzugsweise in vertikaler Richtung in Bezug auf das Präparat positioniert. Die definierte Masse kann beispielsweise durch eine Masse 112 und ein oder mehrere Zusatzgewichte 113 eingestellt werden.

Die definierte Geschwindigkeit der definierten Masse beim Aufprall auf das Präparat beträgt mindestens 0,5 m/s, vorzugsweise mindestens 3 m/s bis 10 m/s, besonders bevorzugt 5 m/s bis 6 m/s. Die definierte Fallhöhe beträgt beispielsweise 10 cm bis 150 cm, vorzugsweise 20 cm bis 120 cm.

Die definierte Knochenfraktur kann in dem Präparat 106 durch das erfindungsgemäßen Verfahren durch einen Kraftsstoß resultierend aus einer kinetischen Energie von 5 bis 500 Joule, vorzugsweise 15 bis 300 J erzeugt werden. Die Kraft, die auf das Präparat beim Aufprall der definierten Masse ausgeübt wird, beträgt vorzugsweise mindestens 50 N, vorzugsweise maximal 34 kN. Die erzeugten kinetischen Energien betragen beispielsweise 15 - 450 J, vorzugsweise 120 bis 250 J (siehe Tabelle 2).

Die definierte Dämpfung mit der die definierte Masse beim Aufprall auf das Präparat abgebremst, kann beispielsweise mit mindestens einem Stoßdämpfer, vorzugsweise mindestens einem hydraulischen Stoßdämpfer eingestellt werden. Der Aufprall kann ungedämpft erfolgen (definierte Dämpfung gleich Null) oder eine definierte Dämpfung eingestellt werden (definierte Dämpfung größer 0). Die definierte Dämpfung, die mittels eines oder mehrerer Mittel zur Einstellung der definierten Dämpfung 110, 210 beispielsweise Stoßdämpfern eingestellt wird, beträgt 5 mm bis 17 mm.

Definierte Knochenfrakturen sind Knochenfrakturen, die bei realen Unfällen an den Knochen entstehen. Definierte Knochenfrakturen sind dem Fachmann bekannt, beispielsweise aus AO-Klassifikation (Maurice E. Müller: The Comprehensive Classification of Fractures of Long Bones in: M. E. Müller u. a. (Hrsg.): Manual of Internal Fixation. 3. Auflage. S. 118 ff. Springer-Verlag, Berlin/Heidelberg/New York/Tokyo 1991, ISBN 3-540-52523-8), Orthopädie und Unfallchirurgie Essentials (Steffen Ruchholtz, Dieter Christian Wirtz), Intensivkurs zur Weiterbildung (2., vollständig überarbeitete und erweiterte Auflage. 1155 Abbildungen. Broschiert. Thieme Georg Verlag, November 2012 - kartoniert - 770 Seiten), Orthopädie und Unfallchirurgie, Facharztwissen nach der neuen Weiterbildungsordnung ((2011) 2. Auflage, Scharf, Hanns-Peter; Rüter, Axel; Pohlemann, Tim; Marzi, Ingo; Kohn, Dieter; Günther, Klaus-Peter).

Erfindungsgemäß umfasst sind Verfahren zur Erzeugung von Einfragmentfrakturen (nur ein Frakturspalt), Stückfrakturen (bis zu drei zusätzliche Fragmente) und Trümmerfrakturen (mehr als drei zusätzliche Fragmente). Definierte Knochenfrakturen umfassen Schaftfrakturen (diaphysäre Frakturen), gelenknahe Frakturen (metaphysäre Frakturen) und Gelenkfrakturen (Frakturen mit Beteiligung der Gelenkfläche und Luxationsfrakturen).

Erfindungsgemäß wird die definierte Knochenfraktur mit dem Verfahren reproduzierbar erzeugt. Das bedeutet, dass eine definierte Knochenfraktur ausgewählt und mit einer gewissen Wahrscheinlichkeit, das bedeutet mit einer gewissen Trefferquote, mit dem erfindungsgemäßen Verfahren erzeugt wird. Reproduzierbar bedeutet, dass die definierte Knochenfraktur mit einer Wahrscheinlichkeit von mindestens 50 %, vorzugsweise mindestens 60 %, 70 %, 80 %, 85 %, 90 %, 95 % oder mehr erzeugt wird. Das erfindungsgemäße Verfahren ermöglicht erstmals die vorhersehbare Erzeugung definierter Knochenfrakturen in Präparaten (kein Zufallsprodukt). Damit ist eine ethisch vertretbare Erzeugung von Humanpräparaten mit definierten Knochenfrakturen für die gewerbliche Nutzung möglich. Die Reproduzierbarkeit führt auch zu einer deutlichen Kostenreduktion in allen Bereichen, in denen diese Präparate benötigt werden, da weniger Ausschuss Präparate erzeugt werden.

Die mit dem erfindungsgemäßen Verfahren erzeugten begleitenden Weichteilverletzungen sind für die jeweilige definierte Knochenfraktur charakteristisch und somit realitätsnah. Es sind offene und geschlossene Knochenfrakturen umfasst. In einer bevorzugten Ausführungsform des Verfahrens werden definierte Knochenfrakturen mit geschlossenem Weichteilmantel erzeugt. Die für jeweilige definierte Knochenfrakturen charakteristischen begleitenden Weichteilverletzungen sind dem Fachmann bekannt, beispielsweise aus Tscherne H, Oestern HJ: Pathophysiology and classification of soft tissue injuries associated with fractures. In: Fractures with soft tissue injuries. Tscherne H Gotzen L.: Berlin; Springer Verlag (1984), S. 1-9.

Gegenstand der Erfindung sind auch die mit Hilfe des erfindungsgemäßen Verfahrens erzeugten Präparate.

Gegenstand der Erfindung ist ein Präparat 106, insbesondere Humanpräparat mit mindestens einer definierten Knochenfraktur und begleitenden Weichteilverletzungen erhältlich durch das erfindungsgemäße Verfahren oder hergestellt nach dem erfindungsgemäßen Verfahren. Präparate mit definierten Knochenfrakturen und begleitenden Weichteilverletzungen können bisher nicht künstlich erzeugt werden. Diese Verletzungen entstehen bisher nur bei realen Unfällen lebender Menschen. Entsprechende Präparate sind mit dem erfindungsgemäßen Verfahren erstmals herstellbar.

Gegenstand der Erfindung ist ein Präparat 106, insbesondere Humanpräparat mit mindestens einer definierten Knochenfraktur mit begleitenden Weichteilverletzungen. Das erfindungsgemäße Präparat 106 umfasst vorzugsweise eine Knochenfraktur mit begleitenden Weichteilverletzung ausgewählt aus distaler Radiusfraktur, distaler Radiusfraktur Extension, distaler Radiusfraktur Flexion, distaler Radiusfraktur Die-punch-Fraktur, distaler Radiusfraktur Chauffeurfraktur.

Als Weichteilmantel wird erfindungsgemäß sämtliches körpereigenes Gewebe verstanden, dass den Knochen eines Präparates umgibt. Das biologische Gewebe, das den Knochen umgibt ist elastischer, verformbarer (weicher) als der Knochen. Zu dem Begriff "Weichteilmantel" zählen unter anderem die Hauptgruppen: Muskeln, Bänder, Sehnen, Gelenkkapseln, Nerven, Haut und Gefäße. Weitere Bestandteile stellen Faszien, Bindegewebe, Knochenhaut, Schleimbeutel. Diese biologischen Strukturen besitzen verschiedene Funktionen und Morphologien und zeigen aus diesem Grund unterschiedliche mechanische Eigenschaften. Auf Grund dieser verschiedenen Eigenschaften reagieren diese Strukturen unterschiedlich auf Verletzungsmechanismen. Bei realen Unfällen kommt es daher in den unterschiedlichen Geweben zu verschiedenen Schädigungen. Man nennt diese gewebespezifischen Schädigungen bei einer Knochenfraktur deshalb auch "typische" oder "begleitende Weichteilverletzungen".

Vorzugsweise ist das Präparat 106 dadurch gekennzeichnet, dass der Weichteilmantel geschlossen ist. Alternativ ist das Präparat 106 dadurch gekennzeichnet, dass der Weichteilmantel geöffnet ist. Mit dem erfindungsgemäßen Verfahren können Präparate mit definierten Knochenfrakturen erzeugt werden, bei denen die Weichteile Verletzungen aufweisen. Darüber hinaus können Präparate mit definierten Knochenfrakturen erzeugt werden, bei denen der Weichteilmantel geöffnet ist. Dabei handelt es sich um Öffnungen, welche entstehen können, wenn spitze oder scharfkantige Knochenfragmente die Weichteile und zuletzt die Haut durchstoßen. Dabei ist klar erkennbar, dass die Eröffnungen der Haut und die Penetration der Weichteile von innen nach außen erfolgt. Dies ist an den Formen und der Gestalt der Öffnungen, sowie den darunterliegenden geschädigten Geweben eindeutig zu erkennen. Diese Knochenfrakturen sind damit klar von solchen, bei denen die Schädigung der Weichteile von außen nach innen erfolgt, zu unterscheiden.

Besondere Ausführungsformen der Erfindung betreffen Präparate und Verfahren zu deren Herstellung im Einzelnen.

Verfahren dadurch gekennzeichnet, dass die definierte Knochenfraktur eine distale Radiusfraktur ist und die definierte Stauchung des Präparats 106 auf 20 bis 36 mm und die definierte Dämpfung auf 6 bis 17 mm eingestellt wird. Präparat umfassend eine distale Radiusfraktur mit begleitenden Weichteilverletzungen, erhältlich nach dem erfindungsgemäßen Verfahren.

Verfahren dadurch gekennzeichnet, dass die definierte Knochenfraktur eine distale Radiusfraktur Extension der Klassifikation 23 A2, 23 C1 - C3 (dorsal) nach AO ist und die definierte Stauchung des Präparats 106 auf 22 bis 30 mm und die definierte Dämpfung auf 6 bis 14 mm eingestellt wird. Präparat umfassend eine distale Radiusfraktur Extension der Klassifikation 23 A2, 23 C1 - C3 (dorsal) nach AO mit begleitenden Weichteilverletzungen, erhältlich nach dem erfindungsgemäßen Verfahren.

Verfahren dadurch gekennzeichnet, dass die definierte Knochenfraktur eine distale Radiusfraktur der Klassifikation 23 A2 (palmar) nach AO ist und die definierte Stauchung des Präparats 106 auf 25 bis 35 mm und die definierte Dämpfung auf 5 bis 17 mm eingestellt wird. Präparat umfassend eine distale Radiusfraktur der Klassifikation 23 A2 (palmar) nach AO mit begleitenden Weichteilverletzungen, erhältlich nach dem erfindungsgemäßen Verfahren.

Verfahren dadurch gekennzeichnet, dass die definierte Knochenfraktur eine distale Radiusfraktur/ Die-punchfraktur der Klassifikation 23 C1 - C2 nach AO ist und die definierte Stauchung des Präparats 106 auf 22 bis 31 mm und die definierte Dämpfung auf 9 bis 15 mm eingestellt wird. Präparat umfassend eine distale Radiusfraktur Die-punchfraktur der Klassifikation 23 C1 - C2 nach AO mit begleitenden Weichteilverletzungen, erhältlich nach dem erfindungsgemäßen Verfahren.

Verfahren dadurch gekennzeichnet, dass die definierte Knochenfraktur eine Radiusfraktur/ Chauffeurfraktur der Klassifikation 23 B1 nach AO ist und die definierte Stauchung des Präparats 106 auf 20 bis 28 mm und die definierte Dämpfung auf 6 bis 14 mm eingestellt wird. Präparat umfassend eine Radiusfraktur Chauffeurfraktur der Klassifikation 23 B1 nach AO mit begleitenden Weichteilverletzungen, erhältlich nach dem erfindungsgemäßen Verfahren.

Verfahren dadurch gekennzeichnet, dass die definierte Knochenfraktur eine distale Radiusfraktur 23 B3 nach AO ist und die definierte Stauchung des Präparats 106 auf 25 bis 36 mm und die definierte Dämpfung auf 10 bis 16 mm eingestellt wird. Präparat umfassend eine distale Radiusfraktur 23 B3 nach AO mit begleitenden Weichteilverletzungen, erhältlich nach dem erfindungsgemäßen Verfahren.

Bei der Durchführung des Verfahrens wird das Präparat zur Fixierung an einer oder mehreren Stellen, vorzugsweise am proximalen und distalen Ende eingegossen, eingeklemmt oder eingespannt. Vor der Fixierung kann das Präparat in einer definierten Geometrie ausgerichtet werden.

Erfindungsgemäß wird das Verfahren zur Erzeugung mindestens einer definierten Knochenfraktur mit begleitenden Weichteilverletzungen in einem Präparat 106 mit einer Vorrichtung 100, 200 durchgeführt. Die Vorrichtung 100, 200 umfasst

    i. mindestens eine Führungssäule 118, 218,
    ii. an einem Ende der Führungssäule 118, 218 eine Grundplatte 101, 201,
    iii. eine Traverse 109, 209 mit Schlagstempel 111, 211,
    iv. mindestens einem Mittel zur Einstellung der Dämpfung beim Aufprall der definierten Masse 110, 210,
    v. mindestens eine Einspannplatte zur Fixierung des Präparats 107, 207,
    vi. eine Masse 112, 212 und gegebenenfalls zusätzliches Gewicht 113, 213 zur Einstellung einer definierten Masse,
    vii. mindestens eine weitere Traverse 115, 215 mit mindestens einem auslösbaren Haltemechanismus 114, 214 zur Positionierung der definierten Masse.

Die Traverse 109, 209, 409 kann höhenverstellbar oder nicht höhenverstellbar sein.

Die Vorrichtung 100, 500, 600 kann Mittel zur Prüfung umfassen, beispielsweise ein oder mehrere Kameras 528 und/oder ein oder mehrere Kraftsensoren 103, 503, um die Reproduzierbarkeit (die Wahrscheinlichkeit), dass eine definierte Knochenfraktur erzeugt wird, stetig zu verbessern und / oder die Abläufe der verschiedenen Ereignisse während der Belastung besser verstehen zu können. Eine Vorrichtung 100, 500, 600, die Mittel zur Prüfung umfasst, kann zur Bestimmung eines oder mehrerer Parameter ausgewählt aus den Parametern Bestimmung der definierten Masse, der definierten Richtung, der definierten Geschwindigkeit der definierten Masse, der definierten Geometrie des Präparats 106, der definierten Stauchung des Präparats 106, der definierten Dämpfung beim Aufprall der definierten Masse, verwendet werden. Das Vorgehen zur Bestimmung definierter Parameter ist nachstehend beschrieben und kann von einem Fachmann zur Bestimmung der definierten Parameter zur Erzeugung weiterer definierter Knochenfrakturen in Präparaten in analoger Weise angewendet werden.

In einer Ausführungsform ist die Vorrichtung 200 zerlegbar und dadurch besser transportabel. Dadurch sind beispielsweise Präparate vor Ort unmittelbar vor der jeweiligen Verwendung herstellbar. Dies ist wünschenswert, da die Präparate mit definierten Knochenfrakturen und begleitenden Weichteilverletzungen besondere Bedingungen der Aufbewahrung benötigen, was dadurch vermieden wird, dass sie erst unmittelbar vor der Verwendung hergestellt werden. Eine Vorrichtung 200 zur Durchführung des erfindungsgemäßen Verfahrens ist zerlegbar in ein Antriebsmodul 229, 329 und ein Aufbaumodul 230, 430 zum Transport der Vorrichtung.

Ein Antriebsmodul 329, 229 für eine Vorrichtung 200 zur reproduzierbaren Erzeugung mindestens einer definierten Knochenfraktur mit begleitenden Weichteilverletzungen in einem Präparat 106 umfasst oder besteht aus

 i. mindestens einer Führungssäule 218, 318,
 ii. einer Masse 212, 312 und gegebenenfalls zusätzlichem Gewicht 213, 313 zur Einstellung einer definierten Masse,
 iii. mindestens einer Traverse 215, 315 mit mindestens einem auslösbaren Haltemechanismus 214, 314 zur Positionierung der definierten Masse,
 iv. gegebenenfalls einer Verkleidung 227, 327,

wobei das Antriebsmodul keine Mittel zur Fixierung des Präparats 106 umfasst.

Ein Aufbaumodul 430, 230 für eine Vorrichtung 200 zur reproduzierbaren Erzeugung mindestens einer definierten Knochenfraktur mit begleitenden Weichteilverletzungen in einem Präparat 106 umfasst keine definierte Masse. Ein Aufbaumodul 430, 230 für eine Vorrichtung 200 zur reproduzierbaren Erzeugung mindestens einer definierten Knochenfraktur mit begleitenden Weichteilverletzungen in einem Präparat 106 umfasst oder besteht aus

 i. Mindestens einer Trägersäule 219, 419,
 ii. an einem Ende der Trägersäule eine Grundplatte 201, 401,
 iii. Mittel zur Fixierung des Präparats 402,
 iv. mindestens einer Traverse 209, 409 mit Schlagstempel 211, 411,
 v. mindestens einem Mittel zur Einstellung der definierten Dämpfung 210 beim Aufprall der definierten Masse und
 vi. mindestens einer Einspannplatte 202, 402 zur Fixierung des Präparats 106,
 vii. gegebenenfalls eine Verkleidung 227, 427,

wobei das Aufbaumodul 430, 230 keine definierte Masse umfasst.

Die Vorrichtung 100, 200 sollte immer speziell gesichert sein, um Verletzungen bei Personen, die die Vorrichtung 100, 200 für das Verfahren benutzen, zu vermeiden. Eine solche spezielle Sicherung umfasst beispielsweise speziell gesicherte Haltemechanismen für die definierte Masse und eine Verkleidung 227. Eine Vorrichtung 100, 200, 500 oder Antriebsmodul 329, 229 umfasst einen mindestens zweifach gesicherten Haltemechanismus 214, 314 für die Positionierung der definierten Masse. Vorrichtung 100, 200, Antriebsmodul 329, 229 und / oder Aufbaumodul 430, 230 umfassen mindestens eine Verkleidung 227, 327, 427.

Die Vorrichtung 100, 200, 300, 400, 500, 600 wird zur Bestimmung eines oder mehrerer Parameter ausgewählt aus den Parametern Bestimmung der definierten Masse, der definierten Richtung, der definierten Geschwindigkeit der definierten Masse, der definierten Geometrie des Präparats 106, der definierten Stauchung des Präparats 106, der definierten Dämpfung beim Aufprall der definierten Masse verwendet. Gegenstand der Anmeldung ist die Verwendung der Vorrichtung 100, 200, 300, 400, 500, 600 zur Durchführung der erfindungsgemäßen Verfahren. Gegenstand der Anmeldung ist die Verwendung der Vorrichtung 100, 200, 300, 400, 500, 600 zur Erzeugung einer definierten Knochenfraktur mit begleitenden Weichteilverletzungen in einem Präparat 106, 506, vorzugsweise zur reproduzierbaren Erzeugung der definierten Knochenfraktur mit einer Wahrscheinlichkeit von mindestens 50 %.

Als Präparat 106 wird erfindungsgemäß ein toter humaner Körper oder toter tierischer Körper oder ein Teil eines toten humanen Körpers, beispielsweise ein abgetrenntes Körperteil (z.B. Arm, Fuß, Knie) oder ein Teil eines toten tierischen Körpers bezeichnet. Das Präparat 106 kann gefroren sein. Der Auftauprozess wird je nach Zielsetzung und anatomischer Region 15 bis 24 Stunden vor der Durchführung des Verfahrens zur Erzeugung der Knochenfraktur eingeleitet. Dazu wird das Präparat 106 aus der Kühlung (bei minus 20 Grad Celsius) genommen, das Verpackungsmaterial entfernt und bei Raumtemperatur (20 bis 22 Grad Celsius) gelagert. Die Bearbeitung ist bei Temperaturen von 10 Grad Celsius bis 25 Grad Celsius, vorzugsweise 15 Grad Celsius bis 23 Grad Celsius möglich. Ein formalin- oder thielfixiertes Präparat 106 kann ohne größere Vorbereitung direkt bearbeitet werden. Die Spender der Präparate weisen in der Regel ein Alter von 78 bis 86 Jahren auf, die Spender können zum Zeitpunkt der Spende der Präparate aber auch älter oder jünger sein. In einer besonderen Ausführungsform des Verfahrens stammt das Präparat 106 von einem Spender mit einem Alter von mehr als 60 Jahren, 70 bis 90 Jahren, vorzugsweise 78 bis 86 Jahren. In einer besonderen Ausführungsform der Erfindung hat das erfindungsgemäße Präparat 106, dass die definierte Knochenfraktur mit begleitenden Weichteilverletzungen umfasst, ein Alter von mehr als 60 Jahren, vorzugsweis von 70 bis 90 Jahren, besonders bevorzugt von 78 bis 86 Jahren.

Das Präparat 106 kann ein Ganzkörperpräparat oder ein Körperteil oder eine definierte anatomische Region sein. Das Präparat 106 kann mindestens eine anatomische Region ausgewählt aus den anatomischen Regionen Hand und 1 bis 5 Finger, Handgelenk, Ellenbogen, Schulter, Knie, Sprunggelenk, Fuß und 1 bis 5 Zehen, Hüfte, Becken, Wirbelsäule, Thorax, Rippen umfassen. Das Präparat 106 kann mindestens ein von der Krafteinwirkung betroffenes Gelenk, vorzugsweise 1 bis 3 von der Krafteinwirkung betroffene Gelenke, umfassen. Das Gelenk kann oder die Gelenke können in der definierten Geometrie eine Gelenkstellung haben, ausgewählt aus Neutralstellung, Gebeugt oder Gestreckt, Rotiert, Varus- oder Valgusstellung.

Die Krafteinleitung in das Präparat erfolgt vorzugsweise nicht direkt, sondern indirekt, beispielsweise über einen Schlagstempel 111, 211, 511 mittels einer Vorrichtung 100, 200, 500. Die indirekte Krafteinleitung ermöglicht eine exakte Fixierung des Präparats 106, 506. Die Schnittstelle zwischen Vorrichtung 100, 500 und Präparat 106, 506 sollte einen bündigen Kraftschluss herstellen, beispielsweise durch Eingießen der Enden des Präparats 106, 506 mit einem kaltaushärtenden Polymer wie Epoxidharz in einer Form 105, 505 und Verschraubung der Form 105, 505 mit der Vorrichtung 100, 500.

Das Präparat 106 kann zur Fixierung in einer definierten Geometrie proximal und / oder distal eingespannt sein. Das Präparat kann um mindestens eine der Einspannungen um einen definierten Winkel rotiert und in dieser definierten Geometrie fixiert werden. Die definierte Geometrie des Präparats 106 in Bezug auf den definierten Kraftstoß bei der Durchführung des Verfahrens entspricht der Gelenkstellung und den Gelenkwinkeln einer Person oder eines Tieres in Bezug auf den einwirkenden Kraftstoß bei einem realen Unfall. Die definierte Geometrie des Präparats 106 kann beispielsweise durch Analyse des Unfallhergangs, beispielsweise durch Dokumente, Bilder, Videoaufnahmen und / oder Augenzeugenberichte einfach ermittelt werden. Für die Fixierung des Präparats 106 in der definierten Geometrie bei der Durchführung des Verfahrens zur Erzeugung einer definierten Knochenfraktur mit begleitenden Weichteilverletzungen können ein oder mehrere Adapter verwendet werden.

In einer Ausführungsform des Verfahrens wird vor der Fixierung des Präparats 106 ein Stück Knochen am proximalen und distalen Ende des Präparats 106 frei präpariert und in einer definierten Geometrie mit einem aushärtenden Material in eine Form 105, 505 eingegossen und anschließend am proximal und distalen Ende in einer Vorrichtung 100, 500 mit einer Einspannplatte 107, 507 und / oder mindestens einem Mittel zur Fixierung des Präparats 102, 502 fixiert. In einer anderen Ausführungsform des Verfahrens wird vor der Fixierung des Präparats 106 ein Stück Knochen am proximalen oder distalen Ende des Präparats 106 frei präpariert und in einer definierten Geometrie mit einem aushärtenden Material in eine Form 105, 505 eingegossen und anschließend am proximal oder distalen Ende in einer Vorrichtung 100, 500 mit einer Einspannplatte 107, 507 oder mindestens einem Mittel zur Fixierung des Präparats 102, 502 fixiert wird.

Die Fixierung des Präparats 106 wird erfindungsgemäß auch als Einspannung des Präparats 106 bezeichnet.

Jede Person, z.B. der Verunfallte und jedes Präparat 106 besitzt drei Bewegungsachsen (Sagital-, Transversal- und Longitudinalachse), die wiederum die drei Körperebenen (Sagital-, Transversal- und Frontalebene) aufspannen (inneres Koordinatensystem). Gleiches gilt für den Raum (äußeres Koordinatensystem), z.B. die Vorrichtung 100. Bei der Fixierung des Präparats 106 in einer definierten Geometrie wird das durch die gewünschte Gelenkstellung des Präparats 106 bei einem Unfall vorgegebene innere Koordinatensystem des Präparats mit dem äußeren Koordinatensystem, das durch die Vorrichtung 100, 200, 500 vorgegeben ist, synchronisiert. Das äußere Koordinatensystem ist bei Verwendung einer Vorrichtung 100, 200, 500 nicht variabel, sondern durch die Vorrichtung 100, 200, 500 fest vorgegeben. Das innere Koordinatensystem des Präparats 106 ist flexibel und es wird an das äußere Koordinatensystem der Vorrichtung 100, 200, 500 so angepasst, dass bei der Durchführung des erfindungsgemäßen Verfahrens die Gelenkstellung und gegebenenfalls die Gelenkwinkel in dem Präparat 106 nachgestellt werden, die bei einem Unfall unter realen Bedingungen die definierte Knochenfraktur erzeugen. Dadurch simuliert das erfindungsgemäße Verfahren die realitätsgetreue Erzeugung der definierten Knochenfraktur in einem Präparat 106, 506. Deshalb werden mit dem erfindungsgemäßen Verfahren keine Zufallsprodukte, sondern gezielt vorher ausgewählte definierte Knochenfrakturen mit den realen begleitenden Weichteilverletzungen erzeugen.

Die Fixierung des Präparats 106 in der definierten Geometrie stellt die Gelenkstellung des realen Unfallhergangs bezogen zur wirkenden Kraftrichtung nach. Die gewählte Einspannung des Präparats 106 in der Vorrichtung 100, 200 während der Durchführung des Verfahrens resultiert aus der theoretischen Vorarbeit in den Stufen 1 und 2 (siehe nachfolgende Beschreibung) bei der Bestimmung der Parameter für eine neue definierte Knochenfraktur. Da es sich bei dem erfindungsgemäßen Verfahren um die Nachbildung eines realen Traumas beziehungsweise Unfalls handeln soll, wird das Präparats 106 in der Vorrichtung 100, 200 in einer definierten Geometrie eingespannt, die sich aus Unfallanalysen ergeben. Die Winkeleinstellungen der Gelenke können dabei beispielsweise mittels Goniometer vorgenommen werden. Da in der Vorrichtung 100, 200 die Impulsübertragung durch den Schlagstempel 111, 211 erfolgt, muss sich die angestrebte Geometrie des oder der Gelenke in dem Präparat 106 in Bezug zu dem Schlagstempel 111, 211 abbilden lassen. Das bedeutet, dass ein Präparat 106 in einer definierten Geometrie zum Schlagstempel 111, 211 der Vorrichtung 100, 200 fixiert wird. Der Wirkungsmechanismus einer Vorrichtung 100, 200 zur Erzeugung der definierten Knochenfraktur in dem Präparat 106 ist immer gleich. Beispielsweise mittels einer gravitationsbeschleunigten, definierten Masse, die aus vertikaler Richtung mit einer definierten kinetischen Energie auf das Präparat 106 aufprallt und in einem definierten Kraftstoß auf das Präparat 106 resultiert.

Um das Präparat 106 in der definierten Geometrie auszurichten, werden beispielsweise Adapter und Formen 105 wie z.B. Eingießvorrichtungen, Schaummatten, Bandagen, Spanngurte, kaltaushärtende Polymere, Klammern, Winkelstücke und andere Hilfsmittel verwendet. Dadurch sind die Einspannmöglichkeiten für das Präparat 106 in der Vorrichtung 100, 200 sehr variabel und jede denkbare definierte Knochenfraktur kann auf diese Weise hergestellt werden.

Schaummatten oder andere Hilfsmittel mit ähnlichen Eigenschaften können eingesetzt werden, um die die Haut des frakturierten Präparats 106 zu schützen. Schaummatten schonen die biologischen Strukturen im Präparat 106, beispielsweise den Handgelenksbereich dadurch, dass sie sie passiv die Fläche der Kraftübertragung vergrößern. Dadurch wird verhindert, dass das Präparat 106 unterhalb der angepeilten Position frakturiert.

Zur Ausrichtung und Fixierung (Einspannung) des Präparats 106 können ein oder mehrere Adapter verwendet werden, die die Ausrichtung und Fixierung in der definierten Geometrie unterstützen. Die Geometrie der Adapter ergibt sich für einen Fachmann aus der Gelenkstellung und den Gelenkwinkeln bei dem zugrundeliegenden realen Unfallhergang.

Beispielsweise können Gruppen von Unfallszenarien zusammengefasst und für den dieser Gruppe zugrundeliegenden Wirkungsmechanismus technische Anpassungen vorgenommen beziehungsweise Adapter entwickelt werden, um eine optimale Einspannung der Präparate in der Vorrichtung 100, 200 zu ermöglichen. Beispielsweise kann der Adapter 04 für die Erzeugung unterschiedlicher Klassen distaler Radiusfrakturen verwendet werden. Die Konstruktion des jeweiligen Adapters richtet sich nach der Orientierung der anatomischen Strukturen der Knochen im Präparat 106 während eines realen Unfalls, nach der Bewegung der anatomischen Region, die den betreffenden Knochen umfasst, während des Unfalls und der Wirkungsweise der Vorrichtung 100, 200.

Folgende Adapter können verwendet werden, um ein Präparat 106 in der definierten Geometrie einzuspannen beziehungsweise zu fixieren:
Adapter 01 hat die Form einer Schale und kann an verschiedenen Stellen in der Vorrichtung 100, 200 fixiert werden, um ein Präparat 106 in der definierten Geometrie auszurichten. Adapter 02 (Halbkugel) besitzt eine sphärische Oberfläche. Der Adapter 02 kann auf der Grundplatte 101, 201 der Vorrichtung 100, 200 aufgestützt werden. Auf der runden Oberfläche des Adapters 02 kann beispielsweise eine Hand aus der Neutralstellung verschoben werden. Adapter 03 hat die Form eines Kegelstumpfs. Er kann auf der Grundplatte 101, 201 der Vorrichtung 100, 200 aufgestützt werden. Auf der schrägen Oberfläche des Adapters 03 kann die Hand seitlich verschoben werden, bis sie eine radiale Abduktion aus der Neutralstellung aufweist.

Adapter 04 ist einem Griff oder einem Fahrradlenker nachempfunden. Adapter 04 kann auf der Grundplatte 101, 201 der Vorrichtung 100, 200 aufgestützt werden.

Adapter 05 hat eine schräge Fläche mit einem Winkel von 15 Grad und kann an verschiedenen Stellen in der Vorrichtung 100, 200 fixiert werden, um ein Präparat 106 in der definierten Geometrie auszurichten.

Adapter 06 und 07 haben die Form eines Stifts, wobei ein Ende des Stiftes abgerundet ist und der Adapter 06 eine Fläche von ca. 3 cm$^2$ und der Adapter 07 eine Fläche von 5 cm$^2$ aufweist. Der Stift steht senkrecht, mit der gerundeten Seite zum Präparat 106 unter dem Schlagstempel 111, 211. Dabei wird das Ende des Adapters 06 oder 07 zentral über der angestrebten Frakturstelle platziert. Zwischen die Oberfläche des Adapters und dem Präparat 106 können Schaummatten appliziert werden. Die Schaummatten können verschiedene Härtegrade aufweisen und verhindern zum einen das Abrutschen des Adapters 06 oder 07 von der angepeilten Frakturstelle, zum anderen vergrößern sie passiv die Fläche der Kraftübertragung.

Adapter 08 hat eine schräge Fläche mit einem Winkel von 30 Grad und kann an verschiedenen Stellen in der Vorrichtung 100, 200 fixiert werden, um ein Präparat 106 in der definierten Geometrie auszurichten.

Adapter 09 hat eine schräge Fläche mit einem Winkel von 45 Grad und kann an verschiedenen Stellen in der Vorrichtung 100, 200 fixiert werden, um ein Präparat 106 in der definierten Geometrie auszurichten.

Adapter 10 hat eine schräge Fläche mit einem Winkel von 60 Grad und kann an verschiedenen Stellen in der Vorrichtung 100, 200 fixiert werden, um ein Präparat 106 in der definierten Geometrie auszurichten.

Adapter 11 (Fingertisch double) und Adapter 12 (Fingertisch tripple) dienen der Einspannung von Fingern. In senkrechter Position wird das Handgelenk in Neutralstellung gehalten und die Phalangen der betreffenden Fingerglieder in den Adapter 11 oder 12 eingesteckt. Das Eigengewicht des Schlagstempels 111, 211 hält in dieser Einspannung das Präparat 106 in der gewünschten definierten Geometrie. Der Adapter 11 oder 12 wird auf der Grundplatte 101, 201 der Vorrichtung 100, 200 flächig aufgestützt und kann auf der Grundplatte 101, 201 verschoben werden. Mit den eingesteckten Fingergliedern kann die Hand seitlich nicht, bzw. nur dann aus der Neutralstellung verschoben werden, wenn sie unter dem Eigengewicht des Schlagstempels 111, 211 nicht steif steht, sondern ausweicht.

Adapter 13 ist eine Humeruskiste zum Einbetten des Humerus und kann an verschiedenen Stellen in der Vorrichtung 100, 200 fixiert werden, um ein Präparat 106 in der definierten Geometrie auszurichten.

Adapter 14 ist ein höhenverstellbares Claviculagestell zur Fixierung der Clavicula und kann an verschiedenen Stellen in der Vorrichtung 100, 200 fixiert werden, um ein Präparat 106 in der definierten Geometrie auszurichten. Das mediale Ende der Clavicula kann in einem Klemmring auf dem Adapter 14 fixiert werden.

Adapter 15 ist eine Winkelplatte, mit der ein Winkel von 90 bis 130 Grad in dem Präparat 106 vorgegeben werden kann.

Adapter 16 (Sandkiste) ist eine Form, die mit Sand gefüllt werden kann und auf dem das Präparat 106 aufgestützt werden kann. Auf dem Boden des Adapters 16 können unter das aufgestützte Präparat 106 Schaummatten appliziert werden. Der Adapter 16 kann mit Quarzsand befüllt und auf der Grundplatte 101, 201 der Vorrichtung 100, 200 verschraubt werden. Die Füllmenge des Adapters 16 kann je nach definierter Knochenfraktur und verwendetem Präparat 106 variieren.

Adapter 17 (Knieflexkammer) basiert auf dem Modell eines umgedrehten Schraubstocks. Das bedeutet, dass Adapter 17 eine parallele Klemmung von 2 Seiten auf das gewählte Präparat 106 aufbringt. Damit ist das Präparat 106 stabil fixiert. Der Adapter 17 kann mit dem Schlagstempel 111, 211 verschraubt werden. Der Kraftstoß beim Aufprall der definierten Masse auf den Schlagstempel 111, 211 wird dadurch direkt auf das Präparat 106 weitergegeben. Der Adapter 17 verfügt über ein Wellengelenk, worüber die Oberfläche, die auf das Präparat 106 drückt, eingestellt werden kann. Dadurch kann der Kraftangriffspunkt zielgenau für die definierte Knochenfraktur im Gelenk angesteuert werden.

Adapter 18 (Monteggiaklammer) dient zum Einklemmen, z.B. des Unterarms. Der Adapter kann auf der Grundlatte 101, 201 oder an einer Stelle des Präparats 106 fixiert werden.

In analoger Weise können weitere Adapter entwickelt werden, wenn die definierte Geometrie des Präparats 106 und / oder die Vorrichtung 100, 200 dies erfordern. Geeignete Adapter und andere Hilfsmittel sind dem Fachmann bekannt.

In einer Ausführungsform des Verfahrens wird das Präparat 106 oder eine bestimmte anatomische Struktur in dem Präparat 106 zentral unter dem Kraftangriffspunkt, beispielsweise dem Schlagstempel 111, 211, fixiert. Dadurch wird gewährleistet, dass die kinetische Energie an der richtigen Stelle des Präparats in dem Kraftstoß resultiert und zur definierten Knochenfraktur und den begleitenden Weichteilverletzungen führt. In einer anderen Ausführungsform des Verfahrens wird das Präparat 106 zur Erzeugung der definierten Knochenfraktur dezentral unter dem Kraftangriffspunkt, beispielsweise dem Schlagstempel 111, 211, fixiert. Die Einspannung des Präparats 106 kann sich nach definierter Knochenfraktur und anatomischer Region des Präparats 106 unterscheiden. Dabei wird das Präparat 106 so fixiert, dass es bei dem Kraftstoß fixiert bleibt. Das Präparat 106 kann sich während des Kraftstoßes zwar bewegen, sollte vorzugsweise aber nicht ausweichen oder abrutschen. Aus diesem Grund wird in einer bevorzugten Ausführungsform der Erfindung mindestens ein Knochenende am Präparat 106 freipräpariert und in einer Form 105 fixiert, beispielsweise mit einem Gießharz. In einer anderen Ausführungsform der Erfindung werden zur Fixierungen beide Enden des Präparats 106 in einer Form 105 fixiert, beispielsweise eingegossen. Die Form bzw. Formen 105 werden in der Vorrichtung 100, 200 fixiert, beispielsweise durch Mittel zur Fixierung des Präparats 102, z.B. einen verstellbaren Schlitten oder eine Einspannplatte 107. Wird ein Ende des Präparats 106 nicht eingegossen, wird es vorzugsweise "geklemmt". Dazu bestehen unter anderem folgende zwei Möglichkeiten: a) das Ende wird zwischen mindestens 2 Metallbacken eingeklemmt - wie bei einem Schraubstock, z.B. mit Adapter 17 oder b) das Ende wird senkrecht oder in einem 90 Grad Winkel unter dem Kraftangriffspunkt, beispielsweise dem Schlagstempel 111, 211 platziert, so dass das Präparat 106 durch sein Eigengewicht und durch das Gewicht des Schlagstempels 111, 211 in Position gehalten wird.

Bei den nachfolgend beschriebenen Verfahren zur Erzeugung definierter Knochenfrakturen in Präparaten 106, 506 wird eine Vorrichtung 100, 200, 300 zusammen mit 400, 500 verwendet. Als definierte Masse wird eine gravitationsbeschleunigte Masse eingesetzt, die auf die Präparate einen Kraftstoß in vertikaler Richtung ausübt. Die definierte Geschwindigkeit wird deshalb in der Vorrichtung 100, 200, 400, 500 mittels einer Höhe eingestellt, aus der die definierte Masse auf das Präparat 106 fällt. Die definierte Stauchung und die definierte Dämpfung werden durch die Mittel zur Einstellung der Dämpfung beim Aufprall eingestellt 110, 210, 510. Hierzu werden in der Vorrichtung 100, 200, 300, 400, 500 vorzugsweise Stoßdämpfer verwendet. Bei der Verwendung von Stoßdämpfern erfolgt die Einstellung dann über eine Strecke (Verfahrweg). Die definierte Dämpfung wird durch den gedämpften Anteil der Stauchung dann ebenfalls als Strecke eingestellt.

Verfahren zur Erzeugung mindestens einer definierten Knochenfraktur mit begleitenden Weichteilverletzungen in einem Präparat 106 mit Hilfe einer Vorrichtung 100, 200 umfassend die Schritte

a) Auswahl einer definierten Knochenfraktur;

b) Auswahl eines Präparats 106;

c) Einstellung einer definierten Masse und Positionierung der definierten Masse in einer definierten Richtung in Bezug auf das Präparat 106 mittels eines Haltemechanismus 114, 214;

d) Ausrichtung des Präparats 106 in einer definierten Geometrie in Bezug auf die Richtung aus der die definierte Masse auf das Präparat 106 aufprallt, wenn der Haltemechanismus 114, 214 gelöst wird mit Hilfe von Mitteln zur Fixierung des Präparats 101, 102;

e) Einstellung einer definierten Geschwindigkeit, mit der die definierte Masse auf das Präparat 106 aufprallt, wenn der Haltemechanismus 114, 214 gelöst wird;

f) Einstellung einer definierten Stauchung, der das Präparat 106 beim Aufprall der definierten Masse ausgesetzt wird, wenn der Haltemechanismus 114, 214 gelöst wird;

g) Einstellung einer definierten Dämpfung mit der die definierte Masse beim Aufprall auf das Präparat 106 abgebremst wird, wenn der Haltemechanismus 114, 214 gelöst wird;

h) Auslösung des Haltemechanismus 114, 214 zur Beschleunigung der definierten Masse in definierter Richtung auf das Präparat 106;

i) Entfernen der Mittel zur Fixierung des Präparats 102;

wobei die Schritte b) bis g) in variabler Reihenfolge durchgeführt werden können.

Nachfolgende Bespiele verdeutlichen das Verfahren und die Präparate 106.

Verfahren zur Erzeugung einer distalen Radiusfraktur der Klassifikation 23 A2, 23 C1 - C3 (dorsal) nach AO in einem Präparat 106 mit einer Vorrichtung 100, 200, dadurch gekennzeichnet, dass a) eine distale Radiusfraktur der Klassifikation 23 A2, 23 C1 - C3 (dorsal) nach AO ausgewählt wird, b) ein Präparat 106 umfassend oder bestehend aus Hand, Unterarm und Oberarm ausgewählt wird, c) eine definierte Masse von 16,8 bis 19,3 kg eingestellt wird, d) das Präparat 106 in einer definierten Geometrie in Bezug auf die Richtung, aus der die definierte Masse auf das Präparat 106 aufprallt, wenn der Haltemechanismus 114, 214 ausgelöst wird, mit Hilfe von Mitteln zur Fixierung des Präparats 102, ausgerichtet wird, beispielsweise wie in Beispiel 3 beschrieben, e) die definierte Geschwindigkeit mittels Fallhöhe auf 76 bis 102 cm eingestellt wird, f) die definierte Stauchung auf 22 bis 30 mm eingestellt wird, g) die definierte Dämpfung als gedämpfter Anteil der Definierten Stauchung auf 6 bis 14 mm eingestellt wird, h) der Haltemechanismus 114, 214 ausgelöst wird, i) das Präparat 106 aus der Vorrichtung 100, 200 entfernt wird. Gegenstand der Erfindung ist ein Präparat 106 umfassend eine distale Radiusfraktur der Klassifikation 23 A2, 23 C1 - C3 (dorsal) nach AO erhältlich durch das vorstehende Verfahren zur Erzeugung einer distalen Radiusfraktur der Klassifikation 23 A2, 23 C1 - C3 (dorsal) nach AO in einem Präparat 106.

Verfahren zur Erzeugung einer distalen Radiusfraktur der Klassifikation 23 A2, (palmar) nach AO in einem Präparat 106 mit einer Vorrichtung 100, 200, dadurch gekennzeichnet, dass a) eine distale Radiusfraktur der Klassifikation 23 A2, (palmar) nach AO ausgewählt wird, b) ein Präparat 106 umfassend oderbestehend aus Hand, Unterarm und Oberarm ausgewählt wird, c) eine definierte Masse von 16,8 bis 20,5 kg eingestellt wird, d) das Präparat 106 in einer definierten Geometrie in Bezug auf die Richtung, aus der die definierte Masse auf das Präparat 106 aufprallt, wenn der Haltemechanismus 114, 214 ausgelöst wird, mit Hilfe von Mitteln zur Fixierung des Präparats 102, ausgerichtet wird, beispielsweise wie in Beispiel 4 beschrieben, e) die definierte Geschwindigkeit mittels Fallhöhe auf 82 bis 102 cm eingestellt wird, f) die definierte Stauchung auf25 bis 35 mm eingestellt wird, g) die definierte Dämpfung als gedämpfter Anteil der Definierten Stauchung auf 5 bis 17 mm eingestellt wird, h) der Haltemechanismus 114, 214 ausgelöst wird, i) das Präparat 106 aus der Vorrichtung 100, 200 entfernt wird. Gegenstand der Erfindung ist ein Präparat 106 umfassend eine distale Radiusfraktur der Klassifikation 23 A2, (palmar) nach AO erhältlich durch das vorstehende Verfahren zur Erzeugung einer distalen Radiusfraktur der Klassifikation 23 A2, (palmar) nach AO in einem Präparat 106.

Verfahren zur Erzeugung einer distale Radiusfraktur Die-punch-fraktur der Klassifikation 23 C1 - C2 nach AO in einem Präparat 106 mit einer Vorrichtung 100, 200, dadurch gekennzeichnet, dass a) eine distale Radiusfraktur Die-punch-fraktur der Klassifikation (bedingt) 23 C1 - C2 nach AO ausgewählt wird, b) ein Präparat 106 umfassend oder bestehend aus Hand, Unterarm und Oberarm ausgewählt wird, c) eine definierte Masse von 17 bis 23,1 kg eingestellt wird, d) das Präparat 106 in einer definierten Geometrie in Bezug auf die Richtung, aus der die definierte Masse auf das Präparat 106 aufprallt, wenn der Haltemechanismus 114, 214 ausgelöst wird, mit Hilfe von Mitteln zur Fixierung des Präparats 102, ausgerichtet wird, beispielsweise wie in Beispiel 5 beschrieben, e) die definierte Geschwindigkeit mittels Fallhöhe auf 90 bis 110 cm eingestellt wird, f) die definierte Stauchung auf 22 bis 31 mm eingestellt wird, g) die definierte Dämpfung als gedämpfter Anteil der Definierten Stauchung auf 9 bis 15 mm eingestellt wird, h) der Haltemechanismus 114, 214 ausgelöst wird, i) das Präparat 106 aus der Vorrichtung 100, 200 entfernt wird. Gegenstand der Erfindung ist ein Präparat 106 umfassend eine distale Radiusfraktur Die-punch-fraktur der Klassifikation 23 C1 - C2 nach AO erhältlich durch das vorstehende Verfahren zur Erzeugung einer distalen Radiusfraktur Die-punch-fraktur der Klassifikation 23 C1 - C2 nach AO in einem Präparat 106.

Verfahren zur Erzeugung einer distalen Radiusfraktur Chauffeurfraktur der Klassifikation 23 B1 nach AO in einem Präparat 106 mit einer Vorrichtung 100, 200, dadurch gekennzeichnet, dass a) eine distale Radiusfraktur Chauffeurfraktur der Klassifikation 23 B1 nach AO ausgewählt wird, b) ein Präparat 106 umfassend oder bestehend aus Hand, Unterarm und Oberarm ausgewählt wird, c) eine definierte Masse von 16,6 bis 18,3 kg eingestellt wird, d) das Präparat 106 in einer definierten Geometrie in Bezug auf die Richtung, aus der die definierte Masse auf das Präparat 106 aufprallt, wenn der Haltemechanismus 114, 214 ausgelöst wird, mit Hilfe von Mitteln zur Fixierung des Präparats 102, ausgerichtet wird, beispielsweise wie in Beispiel 6 beschrieben, e) die definierte Geschwindigkeit mittels Fallhöhe auf 80 bis 93 cm eingestellt wird, f) die definierte Stauchung auf 20 bis 28 mm eingestellt wird, g) die definierte Dämpfung als gedämpfter Anteil der Definierten Stauchung auf 6 bis 14 mm eingestellt wird, h) der Haltemechanismus 114, 214 ausgelöst wird, i) das Präparat 106 aus der Vorrichtung 100 entfernt wird. Gegenstand der Erfindung ist ein Präparat 106 umfassend eine distale Radiusfraktur/ Chauffeurfraktur der Klassifikation 23 B1 nach AO erhältlich durch das vorstehende Verfahren zur Erzeugung einer distalen Radiusfraktur/ Chauffeurfraktur der Klassifikation 23 B1 nach AO in einem Präparat 106.

Verfahren zur Erzeugung einer distalen Radiusfraktur (beispielsweise 23 B3 nach AO) in einem Präparat 106 mit einer Vorrichtung 100, 200, dadurch gekennzeichnet, dass a) eine distalen Radiusfraktur (beispielsweise 23 B3 nach AO) ausgewählt wird, b) ein Präparat 106 umfassend oder bestehend aus Hand und Unterarm ausgewählt wird, c) eine definierte Masse von 20 bis 23 kg eingestellt wird, d) das Präparat 106 in einer definierten Geometrie in Bezug auf die Richtung, aus der die definierte Masse auf das Präparat 106 aufprallt, wenn der Haltemechanismus 114, 214 ausgelöst wird, mit Hilfe von Mitteln zur Fixierung des Präparats 102, ausgerichtet wird, e) die definierte Geschwindigkeit mittels Fallhöhe auf 76 bis 102 cm eingestellt wird, f) die definierte Stauchung auf 25 bis 36 mm eingestellt wird, g) die definierte Dämpfung als gedämpfter Anteil der Definierten Stauchung auf 10 bis 16 mm eingestellt wird, h) der Haltemechanismus 114, 214 ausgelöst wird, i) das Präparat 106 aus der Vorrichtung 100, 200 entfernt wird. Gegenstand der Erfindung ist ein Präparat 106 umfassend eine distale Radiusfraktur (beispielsweise 23 B3 nach AO) erhältlich durch das vorstehende Verfahren zur Erzeugung einer distalen Radiusfraktur (beispielsweise 23 B3 nach AO) in einem Präparat 106.

Weitere Knochenfrakturen können in analoger Weise erzeugt werden, wobei Knochenfrakturen, die keine distalen Radiusfrakturen sind, nicht unter den Schutzumfang des Anspruchs fallen.

Bei der Erzeugung der definierten Frakturen mit dem erfindungsgemäßen Verfahren kann die Individualität der Präparate (anatomisch, geometrisch, biomechanisch) einen Einfluss auf die definierten Parameter wie die definierte Masse, die definierte Geschwindigkeit, die definierte Stauchung, die definierte Dämpfung und die definierte Geometrie haben. Aus diesem Grund wird für diese Parameter ein Bereich / Wertebereich angegeben. Mit den beschriebenen Möglichkeiten der Einspannungen bzw. Fixierung des Präparats in der Vorrichtung 100, 200 und der Einstellung der technischen Parameter in der Vorrichtung 100, 200 ergeben sich Überlappungen bei verwandten Frakturen, z. B. distaler Radiusfraktur Extension und distaler Radiusfraktur Flexion. Das bedeutet, dass z.B. für eine distale Radiusfraktur der Klassifikation 23 A2 (dorsal) nach AO die gleiche Einspannung nötig ist, wie für eine distale Radiusfraktur der Klassifikation 23 C1 - C3 (dorsal) nach AO. Da sich die verschiedenen definierten Knochenfrakturen teilweise nur minimal im Hinblick auf den Frakturverlauf oder die Krafteinwirkung bei einem realen Unfall unterscheiden, unterscheiden, sich auch die Einstellungen an der Vorrichtung 100, 200 zur Erzeugung der definierten Knochenfrakturen kaum. Zu berücksichtigen ist in diesen Fällen die von einem Fachmann erkennbare Individualität des einzelnen Präparats 106 bei der Einstellung der definierten Parameter und der Fixierung bzw. Einspannung des Präparats 106.

Nachfolgend ist die Vorgehensweise zur Anpassung des erfindungsgemäßen Verfahrens zur Erzeugung einer neu ausgewählten definierten Knochenfraktur mit begleitenden Weichteilverletzungen beschrieben. Da es nahezu unmöglich ist, einen Unfallhergang (z.B. einen Motoradunfall) in der Realität nachzustellen, und dazu wie in der Realität einen vollständigen menschlichen Körper als Präparat 106 zu nutzen, muss die Nachstellung der Realität in durch das erfindungsgemäße Verfahren beispielsweise mittels der Vorrichtung 100, 200 die nötigen Kräfte, Geschwindigkeiten auf ein Präparat 106 aufbringen. Dabei arbeitet die Vorrichtung 100, 200 immer nach dem gleichen Prinzip. Die den definierten Knochenfrakturen zugrundeliegenden Verletzungen und Unfälle unterscheiden sich allerdings stets. Für jede neue Knochenfraktur wird das Präparat 106 in der definierten Geometrie in Bezug auf die Richtung, aus der die definierte Masse auf das Präparat 106 aufprallt, wenn der Haltemechanismus 114, 214 ausgelöst wird, in der Vorrichtung 100, 200 fixiert, gegebenenfalls unter Verwendung von Adaptern, die die Fixierung in der definierten Geometrie unterstützen.

Die definierte Stauchung der Präparate 106 ist abhängig von der anatomischen Region und der ausgewählten Knochenfraktur. Die definierte Stauchung kann abhängig von der ausgewählten definierten Knochenfraktur und dem Präparat 106 vom Fachmann bestimmt werden. Die definierte Dämpfung ist abhängig von der anatomischen Region des Präparats 106 und der ausgewählten definierten Knochenfraktur. Die definierte Dämpfung kann abhängig von der ausgewählten definierten Knochenfraktur und dem Präparat 106 vom Fachmann bestimmt werden. Die definierte Stauchung und Dämpfung verhindern, dass das Präparat 106 übermäßig beansprucht und die anatomischen Strukturen (z.B. Knochen und Weichteile) in dem Präparat 106 realitätsfern zerstört werden. Die definierte Geschwindigkeit der definierten Masse, ist die Geschwindigkeit, die die definierte Masse zum Zeitpunkt des Kraftstoßes, d.h. dem Zeitpunkt des Aufpralls der definierten Masse auf das Präparat 106 beziehungsweise bei Verwendung einer Vorrichtung 100, 200 beim Aufprall auf den Schlagstempel 111, 211 erreicht haben soll. Diese ist abhängig von der ausgewählten definierten Knochenfraktur und den beim zugrundeliegenden Unfallhergang wirkenden Kräften. Die definierte Geschwindigkeit kann abhängig von der ausgewählten definierten Knochenfraktur, der definierten Masse und dem Präparat 106 vom Fachmann bestimmt werden.

Um die Einspannung der Präparate und die Einstellungen an der Vorrichtung 100, 200 an die Gegebenheiten des jeweiligen Präparats 106 optimal anzupassen, können individuelle Präparate vor der Durchführung des Verfahrens zur Erzeugung einer definierten Knochenfraktur in dem Präparat 106 untersucht werden, beispielsweise durch das Anfertigen und Begutachten von Röntgen und CT- Aufnahmen, die Durchführung mechanischen und / oder orthopädischen Funktionstests (z.B. manuell) an dem oder den Gelenken. Dadurch können Defizite oder anatomische Besonderheiten in individuellen Präparaten berücksichtigt werden, wie das Gewicht des Präparats 106, der Fettanteil der Weichteilmasse, die Länge, Breite und der Durchmesser der betreffenden Knochen, die Gelenkabstände, die maximalen Gelenkwinkel, die Knochenqualität und degenerative Erkrankungen. Zu den degenerativen Erkrankungen zählen unter anderem die Bildung von Osteophyten, Gelenkinstabilitäten, Osteoarthrose und vor allem Osteoporose. Ist ein Präparat 106 von solchen Einschränkungen betroffen, können Knochenfrakturen nur bedingt oder gar nicht erzeugt werden. Beispielsweis können Knochendichtemessungen an den Präparaten durchgeführt werden. Entsprechend werden für die Erzeugung einer definierten Knochenfraktur bei einem "alten" Präparat 106 (z.B. 90 Jahre, weiblich, geringe Osteoporose, geringe Einschränkung der Gelenkbeweglichkeit) eine etwas abweichende Einstellung der definierten Parameter und der definierten Geometrie und Einspannung an der Vorrichtung 100, 200 eingestellt, als bei einem "jungen" Präparat 106 (z.B. 60 Jahre, männlich, keine weiteren Einschränkungen). Die Methoden und Verfahren zur Bestimmung der Qualität eines Präparats 106 sind dem Fachmann bekannt. Insbesondere kann die Qualität von Präparaten von einem Fachmann auch ohne genaue Messung bereits aufgrund des Alters, der Statur, der Ernährungsgewohnheiten, des Geschlechts und ähnlichem beurteilt und entsprechend berücksichtigt werden.

Die Bestimmung der definierten Parameter für eine neu ausgewählte Knochenfraktur mit begleitenden Weichteilverletzungen umfasst mehrere Schritte i.) bis xi.), die nacheinander oder nebeneinander und in variabler Reihenfolge (Schritte iii.) bis xi.)) durchgeführt werden können.

Die Bestimmung der definierten Parameter umfasst die Schritte

i. Auswahl einer neuen definierten Knochenfraktur;

ii. Auswertung mindestens eines Augenzeugenberichts, Patientenberichts, Bildes, Videos oder Dokuments zur Entstehung der definierten Knochenfraktur bei mindestens einem Verunfallten;

iii. Ausgehend von i.) und ii.) Bestimmung der Geschwindigkeit, Bewegungsrichtung und Gelenkstellung in der anatomischen Region bezogen zur wirkenden Kraftrichtung bei der Entstehung der definierten Knochenfraktur;

iv. Theoretische Annahme der Masse des oder der Verunfallten und Berechnung der Massenträgheit und der Bewegungsrichtung des oder der Verunfallten;

v. Zuordnung der Verletzung zu einer Frakturklasse, beispielsweise nach AO Traumataregister;

vi. Entwicklung mindestens einer Theorie zur reproduzierbaren Erzeugung der definierten Knochenfraktur in einem Präparat 106;

vii. Berechnung des Energiebereichs zur Erzeugung der definierten Knochenfraktur in einem Präparat 106 und Festlegung der definierten Masse und der definierten Geschwindigkeit der definierten Masse,

viii. Auswahl einer definierten anatomischen Region für das Präparat 106,

ix. Bestimmung der Achsensymmetrie des Präparats 106 in Bezug auf den wirkenden Kraftvektor beim Aufprall der definierten Masse und Festlegung der definierten Geometrie für die Fixierung des Präparats 106 in Bezug auf die axial, vorzugsweise vertikal geführte Masse, beispielsweise durch Anpassung des inneren Koordinatensystems des Präparats 106 an das äußere Koordinatensystem einer Vorrichtung 100, 200 zur Nachstellung eines realen Unfallhergangs,

x. Berechnung der definierten Stauchung, der das Präparat 106 beim Aufprall der definierten Masse ausgesetzt werden darf,

xi. Berechnung der definierten Dämpfung beim Aufprall der definierten Masse auf das Präparat 106, wobei die Reihenfolge der Schritte variabel ist.

Die Anpassung des erfindungsgemäßen Verfahrens zur reproduzierbaren Erzeugung einer neuen definierten Knochenfraktur mit begleitenden Weichteilverletzungen ist ein dreistufiger Prozess:

In der ersten Stufe wird eine definierte Knochenfraktur aus den gängigen Frakturklassifikationen (z.B. AO) ausgewählt, die in Präparaten erzeugt werden soll und der definierten Knochenfraktur zu Grunde liegende Verletzungshergang analysiert und die physikalischen Parameter und die biomechanischen Parameter bestimmt (z.B. Recherchen, Datenbanken, deutsches Traumata Register). Die Analyse der Entstehung der Knochenfraktur bei realen Verletzungshergängen erfolgt beispielsweise durch Augenzeugen- und/oder Patientenberichte, die Auswertung von Bildern und/oder Videos. Die physikalischen Parameter, die bestimmt werden, sind die Geschwindigkeiten, z.B. die Geschwindigkeit mit der sich ein Körper oder eine Person, vorzugsweise der Verunfallte, bewegt, die Bewegungsrichtung von einzelnen Körpersegmenten (wie z.B. einem Fuß, einem Unterschenkel) die Masse eines solchen Segments, eines Körpers oder einer Person, insbesondere die Masse des Verunfallten und die daraus resultierende Energie beim Unfall. Die biomechanischen Parameter, die bestimmt werden, sind das Verhalten des biologischen Materials bei dem der Knochenfraktur zugrundeliegenden Unfall, wie die Gelenkwinkel der betroffenen anatomischen Region (z.B. der oberen Extremität), die Massenträgheit des bewegten Körpers (in der Regel der Körper des Verunfallten), die Bewegungsrichtung des Körpers bei dem Unfall und die Frakturklassifikationen. Die Gelenkstellungen bei Unfällen können beispielsweise durch Analyse von Videoaufnahmen erfolgen, Literaturrecherchen, biomechanischen Studien zu Sporttechnik und Sportverletzungen oder Ergonomiestudien.

In der zweiten Stufe wird eine Theorie zum Verletzungsmechanismus erarbeitet. Diese Theorie wird anhand biomechanischer Berechnungen und Modellsimulationen überprüft, beispielsweise kinematische Modellrechnungen zur Bestimmung von Geschwindigkeiten, Beschleunigungen, Positionen und Gelenkwinkeln, inverse dynamische Berechnungen der wirkenden Kräfte und Reaktionskräfte, sowie die auf die osseären und ligamentären Strukturen der Präparate wirkenden Momente. Die berechneten definierten Parameter, nämlich die berechnete definierte Masse, die berechnete definierte Richtung, die berechnete definierte Geschwindigkeit der berechneten definierten Masse beim Aufprall, der berechneten definierten Geometrie des Präparats 106 in Bezug auf den berechneten Kraftstoß beim Aufprall, der berechneten definierten Stauchung des Präparats 106, der berechneten definierten Dämpfung beim Aufprall werden durch Modellrechnungen überprüft. Dabei werden Methoden der angewandten Biomechanik (z.B. Anthropometrie, Kinematik, Dynamik, Kinetik), Bewegungsanalyse, Dynamometrie und Kinemetrie angewendet. Diese Modellrechnungen sind dem Fachmann bekannt, beispielsweise aus Georg Kassat, Biomechanik für Nicht-Biomechaniker, Fitness-Contur-Verl., Bünde 1993; David A. Winter, Biomechanics and Motor Control of Human Movement, 4. Aufl. Wiley, J, New York, NY 2009; Benno Kummer: Biomechanik. Dt. Ärzte-Verl., Köln 2004.

Eine definierte Knochenfraktur kann natürlich auf verschiedene Arten entstehen. Erfindungsgemäß wird die definierte Knochenfraktur vorzugsweise nach dem erfindungsgemäßen Verfahren erzeugt, vorzugsweis unter Verwendung einer Vorrichtung 100, 200. Das bedeutet, dass die Daten und die Ergebnisse der Berechnungen aus den Stufen eins und zwei auf das Wirkungsprinzip des erfindungsgemäßen Verfahrens übersetzt werden. Das erfindungsgemäße Verfahren zeichnet sich dadurch aus, dass eine definierte Knochenfraktur mit geringer Belastung für das Präparat 106 und mit geringem apparativem Aufwand erzeugt werden kann. Dadurch ist eine Erzeugung der definierten Knochenfraktur schneller und mit hoher Wahrscheinlichkeit möglich. In einer bevorzugten Ausführungsform umfasst die theoretische Berechnung deshalb die Übertragung der berechneten Parameter auf die Erzeugung der definierten Knochenfraktur in einem Präparat 106 mit Hilfe einer Vorrichtung 100, 200. In der Vorrichtung 100, 200 wird die definierte Knochenfraktur in dem Präparat 106 durch den Kraftstoß einer gravitationsbeschleunigten Masse erzeugt. Durch die Vorgabe der definierten Richtung, aus der die definierten Masse auf das Präparat 106 aufprallt, ist die definierte Geometrie, in der das Präparat 106 in der Vorrichtung 100, 200 ausgerichtet werden muss, durch die biomechanischen Parameter zwangsläufig definiert.

In der dritten Stufe wird das erfindungsgemäße Verfahren unter Anwendung der berechneten definierten Parameter an Präparaten durchgeführt. Um wirtschaftlich und ethisch verantwortlich mit den Präparaten, insbesondere den Humanpräparaten, bei denen es sich um menschliche Körperspenden handelt, umzugehen, wird eine hohe Reproduzierbarkeit bei der Erzeugung der definierten Knochenfraktur mit begleitenden Weichteilverletzungen angestrebt. Die Etablierung der Reproduzierbarkeit umfasst, dass die definierten Parameter unabhängig von den jeweiligen individuellen Eigenschaften des Präparats 106 zur Erzeugung der definierten Knochenfraktur mit begleitenden Weichteilverletzungen führt. Das bedeutet, dass eine definierte Knochenfraktur mit einer Wahrscheinlichkeit (Trefferquote) von mindestens 50 %, vorzugsweise mindestens 60 % erzeugt wird. Ob die erzeugten Knochenfrakturen den ausgewählten definierten Knochenfrakturen entsprechen, wird beispielsweise mit Röntgenaufnahmen oder CT-Bildern überprüft, die von erfahrenen Unfallchirurgen geprüft und begutachtet werden und mit den gängigen Fraktur-Klassifikationen (unter anderem AO) abgeglichen. Werden die Bilder und später die Knochenfrakturen als übereinstimmend, d.h. realistisch eingestuft, wird der Fokus auf die Reproduzierbarkeit gelegt, um die gewünschte Wahrscheinlichkeit (Trefferquote) von mindestens 50 %, 60 %, 70%, 80 % oder mehr zu erreichen. 300 Simulationen werden insgesamt benötigt, um alle relevanten Frakturen einer anatomischen Region (die 1 Gelenk umfasst) mit einer Wahrscheinlichkeit (Trefferquote) von mindestens 60% zu reproduzieren. Vorzugsweise wird das erfindungsgemäße Verfahren an Präparaten 106, 506 mit den erfindungsgemäßen Vorrichtungen 100, 200, 500, 600 durchgeführt. Dabei werden die biologischen Strukturen in den Präparaten 106, 506 je nach ausgewählter definierter Knochenfraktur hochenergetischen Impulsen und/oder Scherkräften und Biegemomenten ausgesetzt. Über Dynamometrie wird dabei die wirkende Kraft gemessen und die Bewegungen der einzelnen Segmente des Präparats 106 videobasiert aufgenommen. Die erhobenen Daten werden analysiert und ausgewertet. Das Vorgehen ist beispielsweise aus Dieter Fink (2012) (Masterarbeit: Konzeption und Erstellung eines Softwarepakets zur Synchronisation, Datenerfassung und Messsignaldarstellung zum Simulator der Essex Lopresti"), Marc Ebinger (2013) (Masterarbeit "Design and Evaluation of a novel simulator for high-speed injuries of the human forearm"), Robert Holz (2012) (Masterarbeit "Der Mechanismus der Essex- Lopresti: Untersuchung des Gewebeversagens unter Verwendung eines neu entwickelten Simulators") bekannt. Für jede definierte Knochenfraktur wird nach dieser Vorgehensweise eine eigene Kombination aus technischen Parametern (Einstellungen an der Vorrichtung 100, 200), biomechanischen Parametern (Ausrichtung des Präparats 106 in der definierten Geometrie in Bezug auf die Richtung, aus der definierte Masse auf das Präparat 106 aufprallt und Fixierung des Präparats 106 in dieser definierten Geometrie) bestimmt. Diese Parameter sind in den Beispielen für die Erzeugung verschiedener definierter Knochenfrakturen erläutert.

Die Erzeugung einer definierten Knochenfraktur mit begleitenden Weichteilverletzungen nach dem erfindungsgemäßen Verfahren, beispielsweise bei der Prüfung der berechneten Parameter, der Etablierung des Verfahrens oder der Anwendung zur reproduzierbaren Erzeugung umfasst folgende Schritte: gegebenenfalls Auftauen des Präparats 106, gegebenenfalls Eingießen des abgetrennten Stumpfes, Ausrichtung und Einspannen des Präparats 106 in die Vorrichtung 100, 200, Einstellen der definierten Parameter, Auslösen des Haltemechanismus 114, 214, gegebenenfalls Überprüfen und Dokumentieren der Ergebnisse.

Tabelle 1: Reproduzierbar (d.h. mit einer Wahrscheinlichkeit von vorliegend mindestens 50 % oder mehr) erzeugbare definierte Knochenfrakturen mit begleitenden Weichteilverletzungen in Humanpräparaten.

| Anatomische Region | Beispiel Nr. | Fraktur | Status |
|---|---|---|---|
| Hand/ Finger | 1 | Phalangen | Reproduzierbar 86% |
| | 2 | Metacarpale | Reproduzierbar 79% |
| Handgelenk | 3 | Extension (Smith) | Reproduzierbar 90% |
| | 4 | Flexion (Coles) | Reproduzierbar 86% |
| | 5 | Die-punch | Reproduzierbar 69% |
| | 6 | Chauffeur | Reproduzierbar 75% |
| | 7 | Skaphoid | Reproduzierbar 60% |
| Ellbogen | 8 | Radiuskopf | Reproduzierbar 79% |
| | 9 | Coronoid | Reproduzierbar 90% |
| | 10 | Terrible Triad | Reproduzierbar 92% |
| | 11 | Olecranon | Reproduzierbar 94% |
| | 12 | Monteggia | Reproduzierbar 60% |
| | 13 | Monteggia like lesion | Reproduzierbar 66% |
| | 14 | Galeazzi | Reproduzierbar 53% |
| | 15 | Capitulum | Reproduzierbar 72% |
| | 16 | distaler Humerus | Reproduzierbar 79% |
| Schulter | 17 | Clavicula Schaft | Reproduzierbar 70% |
| | 18 | laterale Clavicula | Reproduzierbar 52% |
| | 19 | proximaler Humerus | Reproduzierbar 76% |
| Knie | 20 | distales Femur | |
| | 21 | Tibiakopf | Reproduzierbar 72% |
| Sprunggelenk | 22 | Talus | |
| | 23 | Pilon | Reproduzierbar 62% |
| | 24 | Calcaneus | Reproduzierbar 61 % |

Tabelle 2: Beispiele für definierte Parameter zur Erzeugung definierter Knochenfrakturen (Def. =definierte)

| Nr. | Definierte Knochenfraktur | Klassifikation nach AO Traumataregister | Def. Masse in kg | Def. Fallhöhe in cm | Definierte Stauchung in mm | Definierte Dämpfung in mm | Energie in Joule |
|---|---|---|---|---|---|---|---|
| 1 | Schaftfrakturen der Phalangen I - V | 78 A2, B2, C2 | 5,2 bis 9,8 | 29 bis 46 | 2 bis 8 | 0 bis 5 | 15 bis 44 |

(fortgesetzt)

| Nr. | Definierte Knochenfraktur | Klassifikation nach AO Traumataregister | Def. Masse in kg | Def. Fallhöhe in cm | Definierte Stauchung in mm | Definierte Dämpfung in mm | Energie in Joule |
|---|---|---|---|---|---|---|---|
| 2 | Schaftfrakturen der Metacarpale I - V | 77 A2, B2, C2 | 7 bis 11,2 | 35 bis 52 | 6 bis 14 | 0 bis 9 | 24 bis 57 |
| 3 | distale Radiusfraktur Extension | 23 A2, 23 C1 - C3 (dorsal) | 16,8 bis 19,3 | 76 bis 102 | 22 bis 30 | 6 bis 14 | 125 bis 193 |
| 4 | distale Radiusfraktur Flexion | 23 A2, (palmar) | 16,8 bis 20,5 | 82 bis 105 | 25 bis 35 | 5 bis 17 | 135 bis 211 |
| 5 | distale Radiusfraktur / Die-punch-fraktur | 23 C1 - C2 | 17 bis 23,1 | 90 bis110 | 22 bis 31 | 9 bis 15 | 150 bis 249 |
| Nr. | Definierte Knochenfraktur | Klassifikation nach AO Traumataregister | Def. Masse in kg | Def. Fallhöhe in cm | Definierte Stauchung | Nr. | Definierte Knochen-fraktur |
| 6 | distale Radiusfraktur / Chauffeurfraktur | 23 B1 | 16,6 bis 18,3 | 80 bis 93 | 20 bis 28 | 6 bis 14 | 130 bis 167 |
| 7 | Skaphoidfraktur | 72 A2, B2 - B3 | 16,8 bis 19,5 | 75 bis 88 | 24 bis 32 | 10 bis 17 | 124 bis 168 |
| 8 | Radiuskopffraktur | 21 B2 (Typ I - III nach Mason) | 18,3 bis 21,5 | 75 bis 88 | 21 bis 29 | 9 bis 15 | 135 bis 168 |
| 9 | Coronoidfraktur | 21 B1 (Regan & Morrey Typ I - III) | 18,2 bis 22,8 | 75 bis 86 | 20 bis 33 | 8 bis 16 | 134 bis 192 |
| 10 | Terrible Triad | 21 C1 | 18,9 bis 26,8 | 85 bis 100 | 24 bis 38 | 10 bis 18 | 158 bis 289 |
| 11 | Olecranonfraktur | 21 B1, C1 | 17,1 bis 20 | 61 bis 79 | 4 bis 17 | 0 bis 9 | 116 bis 139 |
| 12 | Monteggiafraktur | 21 A1, B1 | 16,8 bis 17,9 | 72 bis 88 | 28 bis 46 | 10 bis 17 | 119 bis 155 |
| 13 | Monteggia like lesion | 21 B3 | 16,8 bis 18,4 | 75 bis 92 | 30 bis 46 | 9 bis 21 | 124 bis 166 |
| 14 | Galeazzi Fraktur | 22 A3, B3, C1 - C3 | 18,5 bis 22,6 | 95 bis 107 | 24 bis 39 | 6 bis 17 | 172 bis 237 |
| 15 | Capitulumfraktur | 13 B3 | 20,5 bis 24,2 | 70 bis 81 | 14 bis 22 | 6 bis 13 | 141 bis 192 |

(fortgesetzt)

| Nr. | Definierte Knochenfraktur | Klassifikation nach AO Traumataregister | Def. Masse in kg | Def. Fallhöhe in cm | Definierte Stauchung | Nr. | Definierte Knochen-fraktur |
|---|---|---|---|---|---|---|---|
| 16 | distale Humerusfraktur | 13 B1, B2, C1 - C3 | 20,2 bis 27,2 | 68 bis 81 | 26 bis 37 | 0 bis 15 | 135 bis 216 |

| Nr. | Definierte Knochenfraktur | Klassifikation nach AO Traumataregister | Def. Masse in kg | Def. Fallhöhe in cm | Definierte Stauchung In mm | Definierte Dämpfung | Energie in Joule |
|---|---|---|---|---|---|---|---|
| 17 | clavicularen Schaftfraktur | Typ A und B | 12,3 bis 16,5 | 55 bis 68 | 4 bis 12 | 0 bis 06 | 66 bis 110 |
| 18 | lateralen Claviculafraktur | Typ I und II nach Neer | 10,3 bis 21,9 | 57 bis 76 | 5 bis 14 | 0 bis 7 | 58 bis 163 |
| 19 | proximale Humerusfraktur | 11 B1, B3, C1 - C3 | 19,2 bis 28,8 | 65 bis 88 | 29 bis 44 | 0 bis 16 | 122 bis 249 |
| 20 | distale Femurfraktur | 33 C1 - C3 | 26,0 bis 38,7 | 99 bis 116 | 31 bis 49 | 0 bis 37 | 253 bis 440 |
| 21 | Tibiakopffraktur | 41 B1 | 26 bis 31 | 96 bis 112 | 35 bis 47 | 10 bis 13 | 245 bis 341 |
| 22 | Talusfraktur | Typ II, Typ III nach Hawkins | 24,8 bis 37,2 | 68 bis 83 | 26 bis 48 | 0 bis 22 | 165 bis 303 |
| 23 | Pilonfraktur | 43 B3 - B4, C1 - C3 | 24,7 bis 38,5 | 100 bis 111 | 30 bis 51 | 0 bis 25 | 242 bis 419 |
| 24 | Calcaneusfraktur | Typ 2A, 2C, Typ 3AB, 3AC nach Sanders | 24,1 bis 32,7 | 90 bis 98 | 25 bis 43 | 0 bis 18 | 213 bis 314 |
| 25 | Distale Radiusfraktur | 23 B3 | 20 bis 23 | 76 bis 102 | 25 bis 36 | 10 bis 16 | 149 bis 230 |

Die definierte Dämpfung kann gleich Null sein, das heißt, der Aufprall erfolgt ungedämpft.

Gegenstand der Erfindung ist auch die Anwendung erfindungsgemäßer Präparate oder des erfindungsgemäßen Verfahrens für die Ausbildung oder Weiterbildung von medizinischem Personal, Kliniken und Ärzte, insbesondere aus den Bereichen Orthopädie und Unfallchirurgie, insbesondere Chirurgen.

Ein weiterer Anwendungsbereich erfindungsgemäßer Präparate oder des erfindungsgemäßen Verfahrens sind die Hersteller von Artikeln und Geräten für die Unfallchirurgie und Orthopädie. Dieser Industriezweig umfasst alle Hersteller von Implantaten zum Ersatz von Gelenken (z.B. künstliches Hüft- oder Kniegelenk) und zur Versorgung von Frakturen (Osteosynthese).

Weitere Anwendung finden erfindungsgemäße Präparate oder das erfindungsgemäße Verfahren in der Konsumgüterindustrie (z.B. Autoindustrie, Sportgerätehersteller), in der Unfallforschung und Unfallanalyse, im Katastrophenschutz, bei der militärischen Ausbildung und zur Erstellung von Gutachten.

Vorrichtungen 100, 200, 500, Antriebsmodul 329, 229 in Kombination mit Aufbaumodul 430, 230, die zur Durchführung des erfindungsgemäßen Verfahrens geeignet sind.

Einfache Varianten sind im Stand der Technik bekannt, beispielsweise aus McGinley et al. (2003), Robert Holz (2012) (Masterarbeit "Der Mechanismus der Essex- Lopresti: Untersuchung des Gewebeversagens unter Verwendung eines neu entwickelten Simulators"), Marc Ebinger (2013) (Masterarbeit "Design and evaluation of a novel simulator for high-speed injuries of the human forearm") und Dieter Fink (2012) (Masterarbeit "Konzeption und Erstellung eines Softwarepakets zur Synchronisation, Datenerfassung und Messsignaldarstellung zum Simulator der Essex Lopresti").

Darauf aufbauend wurden zwei unterschiedliche Vorrichtungen 100, 200, 500 entwickelt. Ein wissenschaftlicher Prototyp der Vorrichtung 100, 500 zur Bestimmung und Validierung der definierten Parameter, so dass die definierte Knochenfraktur reproduzierbar in einem Präparat 106 erzeugt werden kann. Dieser wissenschaftliche Prototyp umfasst Implementierte Messtechnik, Softwaregesteuerte Synchronisierung der Messtechnik, Massive Bauweise zur zuverlässigen und validen Datengewinnung, Sicherheitssystem mechanisch (elektrisch unterstützt). Für den Betrieb der Vorrichtung 100, 500 sind mindestens 2 Personen notwendig.

Zweitens eine Vorrichtung 200, Antriebsmodul 329, 229 in Kombination mit Aufbaumodul 430, 230 zur kommerziellen Anwendung, dadurch gekennzeichnet, dass die Vorrichtung 100, 200 keine Messtechnik umfasst (für schnellere, effektivere Arbeit), eine leichtere Modulbauweise aufweist, transportabel und schnell montierbar und demontierbar ist, mindestens ein elektrisches Sicherheitssystem, das mechanisch unterstützt ist, aufweist, und für den Betrieb nur mindestens 1 Person notwendig ist.

Im Unterschied zu der Vorrichtung von McGinley et al. können die Vorrichtungen 100, 200 variabel eingestellt werden und sind dadurch zur Erzeugung von unterschiedlichen definierten Knochenfrakturen in geeignet. Die Vorrichtung von McGinley et al. hatte eine feste kinetische Energie beim Aufprall von 238 J, unter Vernachlässigung der Luft- und Gleitreibung.

Die Vorrichtung 100, 200 kann so eingestellt werden, dass die Geschwindigkeit beim Aufprall der definierten Masse auf das Präparat 106 4,2 m/s oder mehr und die Energie beim Aufprall 240 J oder mehr beträgt. Zu den technischen Parametern die an der Vorrichtung 100, 200 eingestellt werden können zählen die definierte Masse, hier die Masse des Fallkörpers, die von 11,8 bis 62,9 kg einstellbar ist, die definierte Geschwindigkeit, hier die Höhe des Fallkörpers, von 0 bis 1100 mm einstellbar, die definierte Stauchung, hier der Weg (Verfahrweg) der dem Präparat 106 gestattet wird um sich in Richtung der wirkenden Kraft zu bewegen und die definierte Dämpfung, hier der Zeitpunkt an dem die Stoßdämpfer die (Rest-) Energie aus dem System nehmen.

Die Anforderungen an die Mechanik der Vorrichtung 100, 200. Aus den Parametern der definierten Masse, der benötigten Zeit bis zum Aufprall und der Fallhöhe lassen sich die Energie, die Geschwindigkeit und daraus die Beschleunigung errechnen. Weiter lassen sich dazu der Impuls und daraus folgend aus dem Impulssatz (theoretisch) die kinetische Energie und die Kraft berechnen. Die Ergebnisse solcher Rechnungen lassen sich dann wiederum mit den Berechnungen die im Vorfeld zur Durchführung des Verfahrens zur Erzeugung einer definierten Knochenfraktur mit begleitenden Weichteilverletzungen erstellt wurden (vergl. Vorgehensweise zur Anpassung des erfindungsgemäßen Verfahrens zur Erzeugung einer neu ausgewählten definierten Knochenfraktur mit begleitenden Weichteilverletzungen) vergleichen. Ebenso dienen sie zum Vergleich mit den tatsächlich gemessenen Kräften und Geschwindigkeiten während der Durchführung des Verfahrens. Die Fixierung und Einspannung der Präparate kann in der Vorrichtung 100, 200 an anatomische Abweichungen angepasst werden und ist gleichzeitig stabil. Es sind Einstellmöglichkeiten berücksichtigt, die die zentrale Positionierung der unterschiedlichen Präparate unter dem Kraftangriffspunkt in der Vorrichtung 100, 200 bei der Durchführung des Verfahrens ermöglichen. Außerdem kann in der Vorrichtung 100, 200 die proximale und distale Einspannung des Präparats 106 separat rotiert werden, um dem Präparat 106 eine Pronation vorzugeben. Weiter umfasst die Vorrichtung 100, 200 Sicherheitsvorrichtungen, die das sichere Arbeiten am und mit der Vorrichtung100, 200 garantieren.

Die Vorrichtung 500, 600 kann eine Messtechnik umfassen. Zur Analyse des Verletzungsmechanismus sind die Verformung der biologischen Strukturen und die zeitliche Reihenfolge der auftretenden Verletzungen von Bedeutung. Um diese während der Durchführung des Verfahrens zu erfassen und anschließend analysieren zu können, kann beispielsweise ein optisches Verfahren verwendet werden. Es sind aber auch andere hochauflösende Verfahren anwendbar. Ein optisches Verfahren muss eine Frequenz von 1000 Hz oder mehr aufbringen, um über die kurze Zeit der Krafteinwirkung (≤ 5 ms) genügend auswertbare Bilder aufnehmen zu können. Um Aussagen über die definierte Geschwindigkeit, hier die Höhe der auf die Präparate wirkenden Kraft machen zu können, wird diese direkt während der Durchführung des Verfahrens gemessen. Entsprechend der Videoanalyse sollte die Aufschlagkraft mit einer Frequenz von mindestens 2000 Hz erfasst werden um das Abtasttheorem nach Shannon und Nyquist zu erfüllen (Harry Nyquist: Certain Topics in Telegraph Transmission Theory. In: Transactions of the American Institute of Electrical Engineers. Vol. 47, 1928; Michael Unser: Sampling - 50 Years after Shannon. In: Proceedings of the IEEE. Vol. 88, No. 4, 2000, S. 569-587).

In der Vorrichtung 100, 200 wird ein gravitationsbeschleunigter Fallkörper als definierte Masse eingesetzt. Über die einstellbare Fallhöhe kann eine immer gleiche Aufschlaggeschwindigkeit auf verschieden lange Präparate ausgeübt werden. Über die variable Masse des Fallkörpers kann die berechnete Kraft und Energie beim Aufprall der definierten Masse auf unterschiedlich lange Präparate generiert werden.

In einer Ausführungsform hat die Vorrichtung 100, 200 eine massive Grundplatte 101, 201 mit den Abmessungen 75 mm x 75 mm x 5 mm und einem Gewicht von ca. 220 kg, zwei fest darin eingelassenen Führungssäulen und zwei zwischen den Führungssäulen verlaufenden Traversen. Die Vorrichtung 100, 200 besitzt eine Höhe von 280 cm und ist von außen mit einer Verkleidung 227 aus Aluminiumprofilen und Makrolonscheiben umgeben. Die obere Traverse 115, 215 dient zur Stabilisierung der Führungssäulen 118, 218. Der vertikal stabil geführte Fallkörper der Vorrichtung 100, 200 umfasst eine Masse 112, 212 und ein oder mehrere Zusatzgewichte 113, 213 zur Einstellung der definierten Masse. Die definierte Masse wird mit einem Elektromagneten (Kendrion GmbH, Donaueschingen) in der Ausgangshöhe gehalten und stellt den Haltemechanismus 114, 214 der Vorrichtung 100, 200 dar. Die definierte Masse gleitet beim vertikalen Fall nahezu reibungsfrei und gravitationsbeschleunigt in Richtung auf das Präparat 106. Die Höhe des Fallkörpers ist variabel und kann von 50 bis 110 cm über einen Stellstab 117 eingestellt werden. Ebenso lässt sich die Masse über Zusatzgewichte 113, 213 von 11,8 kg (Leergewicht) auf bis zu 27 kg steigern. Darunter befindet sich eine Traverse 109, 209, die entweder höhenverstellbar ist oder nicht. Eine höhenverstellbare Traverse kann an die Länge der Präparate 106 angepasst werden. Die Traverse 109, 209 dient zur oberen Einspannung (Ausrichtung in einer definierten Geometrie und Fixierung) der Präparate 106 und beinhaltet einen axial geführten und reibungsfrei gelagerten Schlagstempel 111, 211. Dieser überträgt den Impuls des Fallkörpers auf das Präparat 106. Die Traverse 109, 209 kann ein oder mehrere Kraftsensoren 103 enthalten, vorzugsweise drei Kraftsensoren 103 (Typ 9011A Kistler, Winterthur, Schweiz), welche die auftretende Kraft beim Aufprall des Fallkörpers auf den Schlagstempel 111, 211 (und somit auf das Präparat 106) messen. Um den Fallkörper noch während des Aufschlags auffangen zu können, befindet sich in der Traverse 109, 209 mindestens ein Mittel zur Dämpfung 110, 210, vorzugsweise Stoßdämpfer, vorzugsweise zwei Industriestoßdämpfer (ACE SCS33-25EU, ACE Stoßdämpfer GmbH, Langenfeld). Diese zwei Stoßdämpfer können über einen Bremsweg von 2,6 mm zusammen eine maximale Energie von 310 J aufnehmen und sind ebenfalls höhenverstellbar (65 mm). Durch diese Einstellmöglichkeit kann der Aufprall der definierten Masse auf das Präparat 106 gedämpfte oder ungedämpft erfolgen.

Unterhalb der Traverse 109, 209 befindet sich eine Grundplatte 101, 201 zur unteren Einspannung der Präparate 106. Die Grundplatte 101, 201 umfasst Mittel zur Fixierung des Präparats 106, beispielsweise einen translatorisch auf der Grundplatte verschiebbaren Schlitten und gegebenenfalls eine darauf befestigte Form 105, beispielsweise einen Eingießtopf. Zwischen der Form 105 und Mittel zur Fixierung des Präparats 106 können gegebenenfalls ein oder mehrere Kraftsensoren 103 (z.B. Typ 9061A, Kistler, Winterthur, Schweiz) eingespannt sein. Mit der oberen und unteren Einspannmöglichkeit können Präparate 106 in verschiedenen definierten Geometrien in der Vorrichtung 100, 200 fixiert und vorzugsweise zentral unter dem Schlagstempel 111, 211 positionieren werden. Dadurch kann einem Präparat 106 auch eine definierte Stellung der Gelenke, beispielsweise eine Pronation oder Supination vorgegeben werden.

Der Stellstab 117 in der Vorrichtung 100 dient der Höhenverstellung zur Einstellung der Fallhöhe. Die Höhenverstellung kann auch auf andere Weise erreicht werden, beispielsweise über Seilzug, elektrische Seilwinde oder Bolzenstecksystem.

Bei einer Ausführungsform der Vorrichtung 200 wird der Schwerpunkt auf Wirtschaftlichkeit, Robustheit und Transportfähigkeit der Vorrichtung 200 gelegt. An dieser Vorrichtung 200 werden vorzugsweise definierte Knochenfrakturen in Präparaten für Kundenbestellungen reproduzierbar erzeugt. Deshalb weist diese Vorrichtung 200 vorzugsweise keine Messtechnik auf. Dadurch kann mit der Vorrichtung 200 schneller und effektiver gearbeitet werden. Die Komponenten sind vorzugsweis aus Stahllegierungen und nicht mehr aus Aluminium, um eine längere Lebensdauer des Materials und einen geringeren Verschleiß bei erhöhten Laufzeiten zu ermöglichen. Eine kommerzielle Vorrichtung 200 umfasst vorzugsweise mindestens zwei Module, die für einen einfachen Transport getrennt werden können. Im unteren Modul 400 (Arbeitsmodul) werden die Präparate 106 eingespannt. Das Modul 400 ist so ausgerichtet, dass alle Adaptoren und andere Hilfsmittel zur Einspannung der Präparate 106 in einer definierten Geometrie genutzt werden können, um das Präparat 106 in der definierten Geometrie auszurichten. Die Dimensionierung des Arbeitsraumes in alle 3 Richtungen ist erhöht, um schneller arbeiten zu können. Das obere Modul 300 (Antriebsmodul) wurde um einige Komponenten erweitert. Der Grund dafür ist, die Wirtschaftlichkeit der Vorrichtung 200 zu erhöhen und die Arbeit an der Vorrichtung 200 sicherer zu gestalten. An 2 ca. 2 m langen, senkrecht stehenden Führungssäulen 218 wird ein Fallkörper magnetisch gehalten, der bei Freigabe entlang der Führungssäulen 218 bis auf den Schlagstempel 211 gleitet. Die Einstellungen der Fallhöhe und der definierten Masse können von einer Person alleine ausgeführt werden. Dazu wird der Haltemechanismus 214 für die definierte Masse so gesteuert, dass der Haltemechanismus 214 nicht unbeabsichtigt ausgelöst wird. Beispielsweise dadurch, dass die elektrisch angesteuerte Halterung von 2 Magneten so programmiert wird, dass diese permanent magnetisch sind, also das Gewicht der definierten Masse halten. Nur wenn diese Magnete den über ein Sicherheitsschloss gesteuerten elektrischen Befehl erhalten, lösen diese die Verbindung zur definierten Masse (dem Fallkörper). Ein Stromausfall oder eine andere technische Störung kann den Haltemechanismus 214 somit nicht unterbrechen. Zusätzlich wird der Fallkörper während der Arbeiten im Arbeits- und/ oder Antriebsmodul 329, 229, 400 über Sperrbolzen mechanisch gesichert, die erst unmittelbar vor dem Fall entfernt werden. Der (freie) Fall des Fallkörpers wird über ein elektrisches Signal an die Magnete ausgelöst. Um den Fallkörper wieder anzuheben wird innerhalb des Antriebsmoduls 300 eine Traverse 215, 315 entlang der Führungssäulen 218, 318 herabgelassen, die sich über oben beschriebenes Magnetsystem mit dem Fallkörper verbindet. Anschließend wird der Verbund über einen Flaschenzug 225 nach oben gezogen. Die Freigabe der Masse 212, 312 ist ebenfalls über einen baugleichen Sicherheitsschalter 226, 326 per Knopfdruck auszulösen, und kann nicht durch einen Stromausfall oder eine sonstige technische Störung tangiert werden. Außerdem wird die Masse 212, 312 zusätzlich durch Sicherheitsbolzen gesichert, die in die Bohrungen 221, 321 gesteckt werden.

In einer weiteren Ausführungsform der Vorrichtung 200 umfasst diese in Aufbaumodul 430, 230 und ein Antriebsmodul 329, 229. Diese Vorrichtung 200 eignet sich besonders für eine kommerzielle Anwendung, da die beiden Module einfach getrennt, transportiert und wieder zur Vorrichtung 200 zusammengebaut werden können. Die gesamte Vorrichtung 200 hat eine Höhe von 315 cm.

Das Aufbaumodul 430, 230 umfasst eine Grundplatte 401 (z.B. die 70 cm x 82 cm) auf der zwei Trägersäulen419, beispielsweise mit einem Abstand von 54cm eingebracht sind. Die Trägersäulen 419 verfügen über eine Höhe von mindestens 50 cm, vorzugsweise 110 cm und tragen die Traverse 409 mit dem integrierten Schlagstempel 411. An der unteren Seite des Schlagstempels 411 können verschiedene Einspannvorrichtungen oder Adapter angebracht werden. In dem Aufbaumodul 430, 230 ist die Traverse 409 in der Höhe verstellbar oder nicht verstellbar. Vorzugsweise ist die Traverse 409 nicht in ihrer Höhe verstellbar, so dass die Arbeitshöhe konstant gehalten und die Grundplatte 401, auf der das Präparat 106 gelagert wird, an die Höhe des Schlagstempels 411 angepasst wird. Diese Anpassung wird beispielsweise über Tische (z.B. mit einer Fläche 40 x 40 cm) mit unterschiedlichen Höhen, die in der Grundplatte mittels Bohrungen 402 verschraubbar sind, durchgeführt. In der Traverse 409 sind gegebenenfalls ein oder mehrere Mittel zur Einstellung der Dämpfung, beispielsweise zwei Stoßdämpfer eingebaut.

Die Erzeugung des Kraftstoßes im Antriebsmodul 329, 229 basiert auf der gleichen Technik wie in der Vorrichtung 100. Das Antriebsmodul 329, 229 umfasst mindestens eine Führungssäule 318, vorzugsweise zwei z.B. 190 cm lange Führungssäulen 318. Die Führungssäulen 318 können über Bohrungen 321, beispielsweise in 3 cm Abständen aufweisen. Diese Bohrungen 321 dienen zur Platzierung der Sicherungsbolzen und zur sicheren Positionierung der definierten Masse. Auf den Führungssäulen 318 laufen die Masse 312, und mindestens zwei weitere Traversen 315 und 324. Die Masse 318 besitzt ein Eigengewicht von z.B. 18 kg und kann über Zusatzgewichte 313 auf eine definierte Masse eingestellt werden, z.B. eine definierte Masse von max. 72 kg.

Das Antriebsmodul umfasst vorzugsweise Sicherungsmechanismen zur Vermeidung von Unfällen bei der Durchführung des erfindungsgemäßen Verfahrens. Folgende nicht limitierende Beispiele für entsprechende Sicherungsmechanismen können einzeln oder in Kombination Bestandteil des Antriebsmoduls 300 sein.

An der Masse 318 befinden sich mindestens zwei Haltemechanismen 314, z.B. zwei Andockplatten, an denen Dauermagneten an der Unterseite der Traverse 315 andocken können. Die Dauermagnete passen auf die Andockplatten der Fallmasse.

Die Traverse 315 ist z.B. über einen Seilzug 225 (mit z.B. 3 Umlenkrollen) zu bewegen. Sie dient dazu, die Fallmasse nach der Durchführung des Verfahrens sicher wieder anzuheben. Haben die Magnete an der Fallmasse angedockt, lässt sich die Fallmasse mit der verbundenen Traverse 315 über den Seilzug 225 anheben.

Auf der Oberseite der Traverse 315 kann sich mindestens ein Stift eines elektrischen Stecksignalgebers befinden und zwei weitere Andockplatten. Wird die Traverse 315 bis unter die Traverse 324 gehoben (dort befindet sich der passende Einlass für den Stift 323) verbinden sich der Stift 322 auf der Traverse 315 mit dem Einlass für den Stift 323 auf der Unterseite der Traverse 324. Dadurch wird ein elektrisches Schloss geschlossen. Gleichzeitig verbinden sich die Andockplatten der Traverse 315 mit den Dauermagneten der Traverse 324. Damit sind die Traverse 324 und die Traverse 315 und die Fallmasse fest verbunden. Die Traverse 324 dient der Halterung dieses Verbundes und zur Regulierung der Fallhöhe. Die Traverse 324 und 7 oder die Traverse 315 wird über Sicherheitsbolzen in den Führungssäulen 318 gehalten. Zur Verstellung der Fallhöhe müssen die Sicherheitsbolzen entfernt werden. Unterhalb der Fallmasse kann ebenfalls eine Sicherung über Sicherheitsbolzen in den Bohrungen 321 der Führungssäule 318 erfolgen.

Um die Fallmasse für die Durchführung des Verfahrens frei zu geben, müssen die Dauermagnete an der Traverse 315 und 324 umgepolt werden. Dies geschieht über ein elektrisches Signal. Das bedeutet, dass die Fallmasse nur von den Magneten freigegeben wird, wenn Strom fließt. Wird die Vorrichtung 200 vom elektrischen Anschluss getrennt, kann die Fallmasse nicht herunterfallen. Das elektrische Signal, das den freien Fall der Masse auslöst, wird über einen Sicherheitsschalter 226, 326 an der Außenseite des Antriebsmoduls 300 erzeugt. Der Sicherheitsschalter 226, 326 muss manuell über einen Schlüssel freigegeben und durch einen zusätzlichen Knopfdruck ausgelöst werden. Die Signalgabe des Sicherheitsschalters 226, 326 kann nur ausgelöst werden, wenn sich die Traverse 315 und 324 mit der Fallmasse über den Stecksignalgeber 322 und 323 ordnungsgemäß verbunden haben.

Sowohl das Aufbau- als auch das Antriebsmodul 329, 229, 400 sind von einer undurchsichtigen Verkleidung 227, 327, 427 (z.B. Blechverkleidung) umgeben. Die Verkleidungen sind beispielsweise Makrolonscheiben und / oder Blechverkleidungen. Diese verhindert, dass eine Person während der Durchführung des erfindungsgemäßen Verfahrens in die Vorrichtung 200 greift und sich verletzt.

Zur Validierung der theoretisch berechneten definierten Geometrie des Präparats 106 in Bezug auf die definierte Richtung aus der die definierte Masse auf das Präparat 106 aufprallt, zur Validierung der theoretisch berechneten definierten Stauchung des Präparats 106 beim Aufprall der definierten Masse, zur Validierung der theoretisch berechneten definierten Dämpfung beim Aufprall der definierten Masse, zur Validierung der theoretisch berechneten definierten Geschwindigkeit der definierten Masse wird eine Vorrichtung 500, 600 mit Messtechnik verwendet. Eine entsprechende Messtechnik kann verwendet werden, um die Trefferquote zur Erzeugung der definierten Knochenfraktur zu verbessern. Der Aufbau und die Auswertung sind aus Robert Holz (2012) (Masterarbeit "Der Mechanismus der Essex- Lopresti: Untersuchung des Geweberversagens unter Verwendung eines neu entwickelten Simulators"), Marc Ebinger (2013) (Masterarbeit "Design and evaluation of a novel simulator for high-speed injuries of the human forearm") und Dieter Fink (2012) (Masterarbeit "Konzeption und Erstellung eines Softwarepakets zur Synchronisation, Datenerfassung und Messsignaldarstellung zum Simulator der Essex Lopresti") bekannt.

Die Figuren dienen der Beschreibung von Vorrichtungen, die zur Durchführung des erfindungsgemäßen Verfahrens und zur Erzeugung der erfindungsgemäßen Präparate geeignet sind.

FIG 1: Vorrichtung 100 umfassend Grundplatte 101, Mittel zur Fixierung des Präparats 102, Kraftsensor 103, Präparat 106, Einspannplatte 107, Kugellager 108, Traverse 109 mit Schlagstempel 111, Mittel zur Einstellung der Dämpfung 110, Masse 112 und Zusatzgewicht 113, Haltemechanismus 114, Traverse 115, Dach 116, Stellstab 117, Führungssäule 118.

FIG 2: Vorrichtung 200 umfassend Antriebsmodul 229 und Aufbaumodul 230, Grundplatte 201, Einspannplatte 207, Traverse 209 mit Schlagstempel 211, Mittel zur Einstellung der Dämpfung 210, Masse 212, Zusatzgewicht 213, Haltemechanismus 214, Traverse 215, Dach 216, Führungssäule 218, Trägersäule 219, Andockplatte 220, Bohrung 221, Stift für Signalgeber 222, Einlass für den Stift 223, Traverse 224, Flaschenzug 225, Sicherheitsschalter 226, Verkleidung 227.

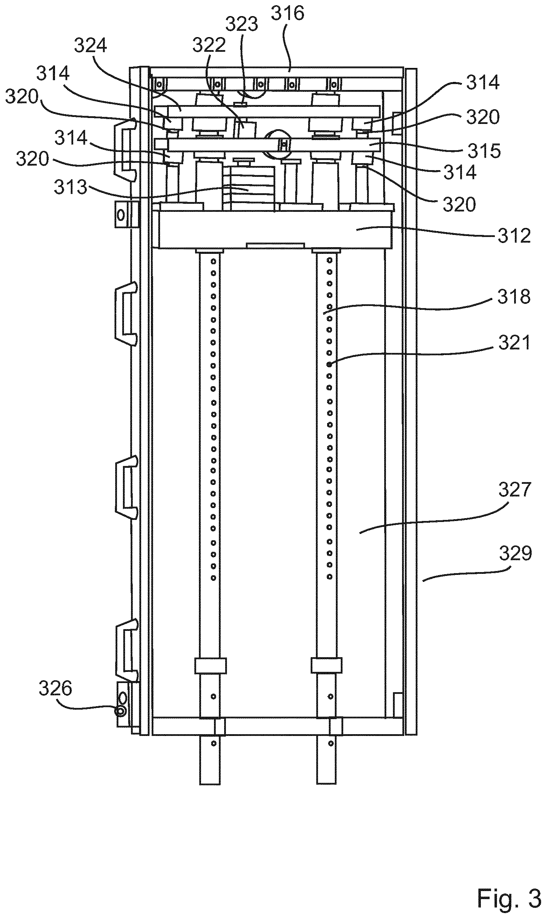

FIG 3: Antriebsmodul 329 für eine Vorrichtung 200 umfassend Masse 312, Zusatzgewicht 313, Haltemechanismus 314, Traverse 315, Dach 316, Führungssäule 318, Andockplatte 320, Bohrung 321, Stift für Signalgeber 322, Einlass für Stift 323, Traverse 324, Sicherheitsschalter 326, Verkleidung 327.

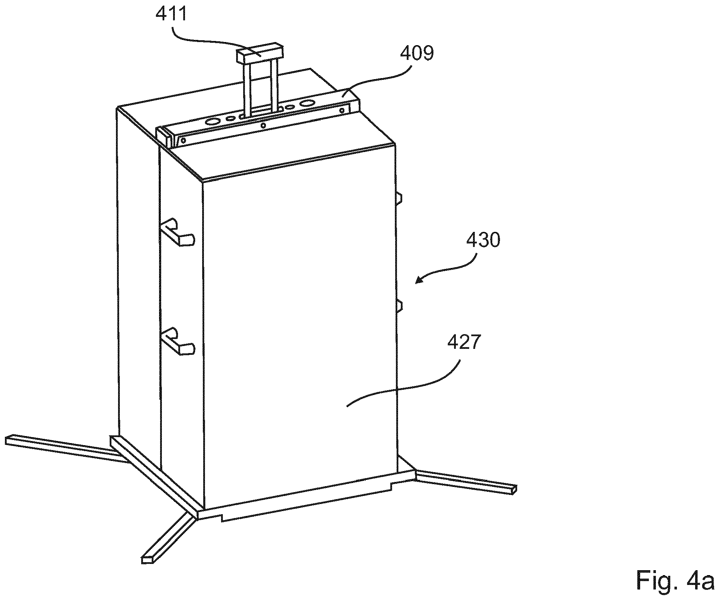

FIG 4a: Aufbaumodul 430 für eine Vorrichtung 200 mit geschlossener Verkleidung 427.

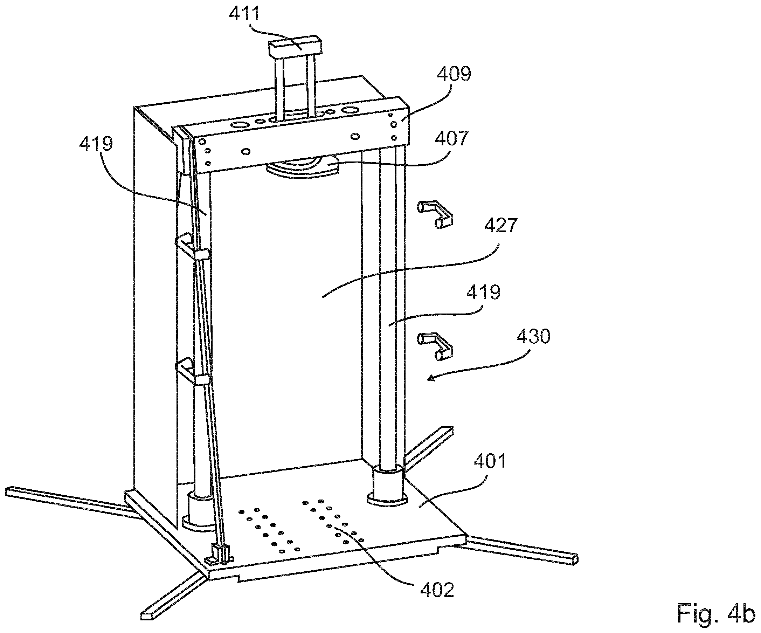

FIG 4b: Aufbaumodul 430 für eine Vorrichtung 200 mit geöffneter Verkleidung 427, Grundplatte 401, Mittel zur Fixierung des Präparats 402, Einspannplatte 407, nicht höhenverstellbare Traverse 409 mit Schlagstempel 411.

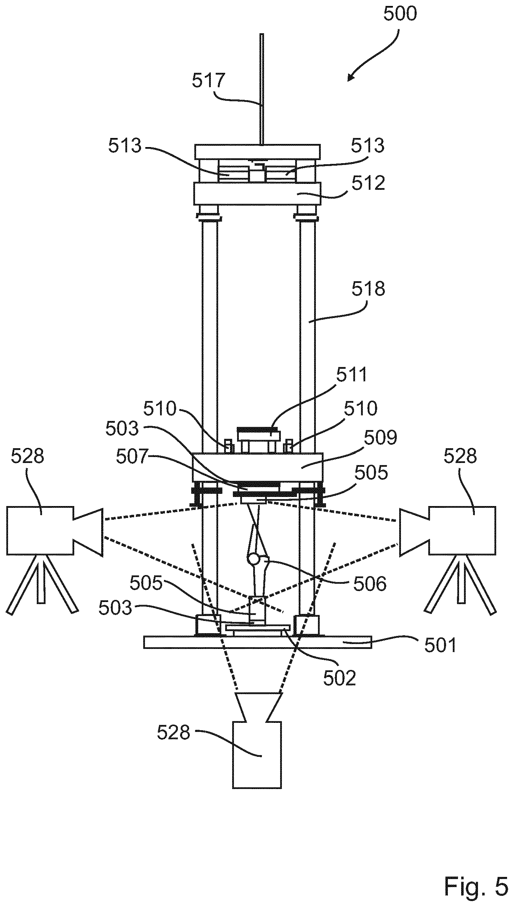

FIG 5: Vorrichtung 500 zur Bestätigung der berechneten Parameter und zur Etablierung des erfindungsgemäßen Verfahrens unter Verwendung der berechneten Parameter umfassend ein eingespanntes Präparat 506, das am proximalen und distalen Ende in einer Form 505 eingegossen ist, Kameras 528 und Kraftsensoren 503. Eine Form 505 ist auf dem Mittel zur Fixierung des Präparats 502 befestigt, die zweite Form 505 an der Einspannplatte 507 befestigt. Die Vorrichtung 500 umfasst Grundplatte 501, höhenverstellbare Traverse 509 mit Schlagstemple 511, Masse 512 mit Zusatzgewicht 513, Stellstab 517, Führungssäulen 518.

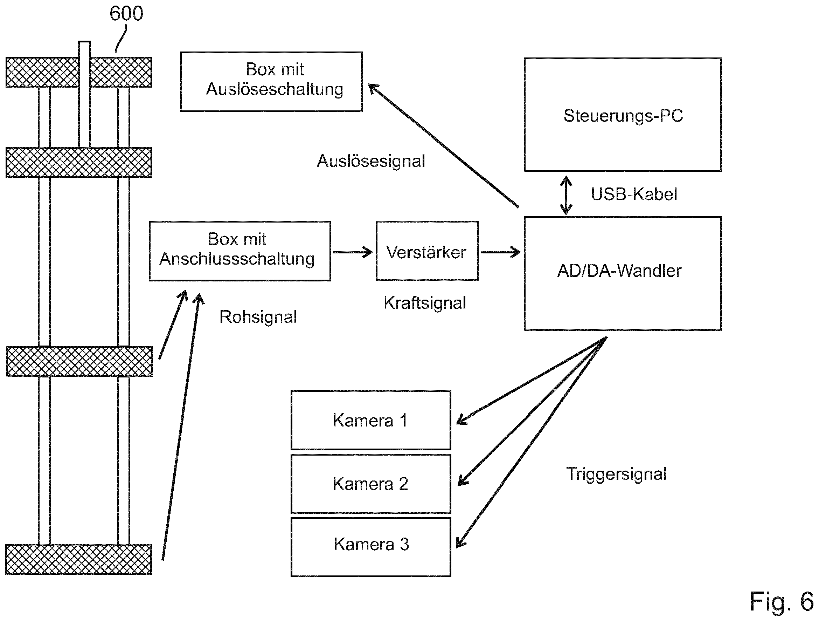

FIG 6: Versuchsaufbau mit Vorrichtung 600 zur Bestätigung der berechneten Parameter und zur Etablierung des erfindungsgemäßen Verfahrens unter Verwendung der berechneten Parameter.

Die nachfolgenden Beispiele dienen der Erläuterung des erfindungsgemäßen Verfahrens und der erfindungsgemäßen Humanpräparate, die eine definierte Knochenfraktur umfassen. Die Erfindung ist jedoch nicht auf die bereits reproduzierbar herstellbaren Präparate mit definierten Knochenfrakturen beschränkt, sondern lässt sich auf weitere distale Radiusfrakturen anwenden, die in analoger Weise, wie in der Beschreibung und den Beispielen erläutert, in Präparaten erzeugt werden können.

Beispiel 1: Ausrichtung in einer definierten Geometrie zur reproduzierbaren Erzeugung einer distalen Radiusfraktur (Extension, 23 A2, 23 C1 - C3 dorsal nach AO).

Für eine distale Radiusfraktur der Klassifikation 23 A2, 23 C1 - C3 (dorsal) nach AO wird ein Präparat 106 bestehend aus Hand, Unterarm und Oberarm ausgewählt.

Zur Ausrichtung des Präparats 106 in der definierten Geometrie wird der Oberarm ca. 10 - 12 cm distal des Humeruskopfes abgesetzt. Am Humerusstumpf werden ca. 5 cm der Weichteile abpräpariert und der Humerus Knochen senkrecht in einer Form 105 mittels kaltaushärtendem Polymer eingegossen. Die Form 105 wird in der Vorrichtung 100 mit der Einspannplatte 107 am Schlagstempel 111 verbunden. Dabei steht die Schnittfläche des Humerus zentral unter dem Kraftangriffspunkt. Das Humeroulnargelenk wird aus der maximalen Streckung (meist zwischen 176 und 189 Grad, der Winkel ist Präparat-abhängig) um 10 bis 12 Grad gebeugt. In dieser Position wird der Unterarm aus der maximalen Supination in eine Pronation von 60 bis 70 Grad gedreht. Das Handgelenk wird maximal (maximal bedeutet Präparat-abhängig 59 - 68 Grad) ausgehend von der Neutralstellung extendiert und auf einem Adapter 04 aufgestützt.

An der Vorrichtung 100 werden folgende Einstellungen vorgenommen: Die definierte Masse (Fallmasse) 16,8 bis 19,3 kg, die definierte Geschwindigkeit mittels Fallhöhe auf 76 bis 102 cm, die definierte Stauchung auf 22 bis 30 mm und die definierte Dämpfung durch den gedämpften Anteil der definierten Stauchung auf 6 bis 14 mm.

Der Haltemechanismus 114 wird ausgelöst und die distale Radiusfraktur der Klassifikation 23 A2, 23 C1 - C3 (dorsal) nach AO mit einer Wahrscheinlichkeit von 90 % in dem Präparat 106 erzeugt.

Beispiel 2: Ausrichtung in einer definierten Geometrie zur reproduzierbaren Erzeugung einer distalen Radiusfraktur (Flexion, 23 A2, -palmar nach AO)

Für eine distale Radiusfraktur der Klassifikation 23 A2, (palmar) nach AO wird ein Präparat 106 bestehend aus Hand, Unterarm und Oberarm vorbereitet.

Zur Ausrichtung des Präparats 106 in der definierten Geometrie wird der Oberarm ca. 10 - 12 cm distal des Humeruskopfes abgesetzt. Am Humerusstumpf werden ca. 5 cm der Weichteile abpräpariert und der Humerus Knochen senkrecht in einer Form 105 mittels kaltaushärtendem Polymer eingegossen. Die Form 105 wird in der Vorrichtung 100 mit der Einspannplatte 107 am Schlagstempel 111 verbunden. Dabei steht die Schnittfläche des Humerus zentral unter dem Kraftangriffspunkt. Das Humeroulnargelenk wird aus der maximalen Streckung (meist zwischen 176 und 189 Grad, der Winkel ist Präparat-abhängig) um 10 bis 12 Grad gebeugt. In dieser Position wird der Unterarm aus der maximalen Supination in eine Pronation von 50 bis 60 Grad gedreht. Das Handgelenk wird um 45 - 58 Grad (ausgehend von der Neutralstellung) flektiert und auf einem flachen Untergrund gegen die Grundplatte 101 der Vorrichtung 100 aufgestützt.

An der Vorrichtung 100 werden folgende Einstellungen vorgenommen: Die definierte Masse (Fallmasse) 16,8 bis 20,5 kg, die definierte Geschwindigkeit mittels Fallhöhe auf 82 bis 102 cm, die definierte Stauchung auf 25 bis 35 mm und die definierte Dämpfung durch den gedämpften Anteil der Definierten Stauchung auf 5 bis 17 mm. Der Haltemechanismus 114 wird ausgelöst und die distale Radiusfraktur der Klassifikation 23 A2 (palmar) nach AO mit einer Wahrscheinlichkeit von 86 % in dem Präparat 106 erzeugt.

Beispiel 3: Ausrichtung in einer definierten Geometrie zur reproduzierbaren Erzeugung einer distalen Radiusfraktur/ Die-punch-fraktur (bedingt 23 C1 - C2 nach AO).

Für eine distale Radiusfraktur Die-punch-fraktur der Klassifikation (bedingt) 23 C1 - C2 nach AO wird ein Präparat 106 bestehend aus Hand, Unterarm und Oberarm vorbereitet.

Zur Ausrichtung des Präparats 106 in der definierten Geometrie wird der Oberarm ca. 10 - 12 cm distal des Humeruskopfes abgesetzt. Am Humerusstumpf werden ca. 5 cm der Weichteile abpräpariert und der Humerus Knochen senkrecht in einer Form 105 mit kaltaushärtendem Polymer eingegossen. Die Form 105 wird in der Vorrichtung 100 mit der Einspannplatte 107 am Schlagstempel 111 verbunden. Dabei steht die Schnittfläche des Humerus zentral unter dem Kraftangriffspunkt. Das Humeroulnargelenk wird aus der maximalen Streckung (meist zwischen 176 und 189 Grad, der Winkel ist Präparat-abhängig) um 0 bis 8 Grad gebeugt. In dieser Position wird der Unterarm aus der maximalen Supination in eine Pronation von 45 bis 52 Grad gedreht. Das Handgelenk wird in Neutralstellunggehalten und auf einem Adapter 04 auf der Grundplatte 101 der Vorrichtung 100 aufgestützt. Die Hand umschließt dabei die Griffstange des Adapters 04, die Phalangen werden gebeugt. Die Hand bildet damit eine Faust, welche die Griffstange umschließt und mit den Phalangen II - IV gegen die Grundplatte 101 der Vorrichtung 100 stützt.

An der Vorrichtung 100 werden folgende Einstellungen vorgenommen: Die definierte Masse (Fallmasse) 17 bis 23,1 kg, die definierte Geschwindigkeit mittels Fallhöhe auf 90 bis110 cm, die definierte Stauchung auf 22 bis 31 mm und die definierte Dämpfung durch den gedämpften Anteil der definierten Stauchung auf 9 bis 15 mm. Der Haltemechanismus 114 wird ausgelöst und die distale Radiusfraktur/Die-punch-fraktur der Klassifikation (bedingt) 23 C1 - C2 nach AO wird mit einer Wahrscheinlichkeit von 69 % in dem Präparat 106 erzeugt.

Beispiel 4: Ausrichtung in einer definierten Geometrie zur reproduzierbaren Erzeugung einer distalen Radiusfraktur Chauffeurfraktur (23 B1 nach AO).

Für eine distale Radiusfraktur Chauffeurfraktur der Klassifikation 23 B1 nach AO wird ein Präparat 106 bestehend aus Hand, Unterarm und Oberarm vorbereitet.

Zur Ausrichtung des Präparats 106 in der definierten Geometrie wird der Oberarm ca. 10 - 12 cm distal des Humeruskopfes abgesetzt. Am Humerusstumpf werden ca. 5 cm der Weichteile abpräpariert und der Humerus Knochen senkrecht in einer Form 105 mit kaltaushärtendem Polymer eingegossen. Die Form 105 wird in der Vorrichtung 100 mit der Einspannplatte 107 am Schlagstempel 111 verbunden. Dabei steht die Schnittfläche des Humerus zentral unter dem Kraftangriffspunkt. Das Humeroulnargelenk wird aus der maximalen Streckung (meist zwischen 176 und 189 Grad, der Winkel ist Präparat-abhängig) um 0 bis 8 Grad gebeugt. In dieser Position wird der Unterarm aus der maximalen Supination in eine Pronation von 45 bis 52 Grad gedreht. Das Handgelenk wird 35 - 43 Grad aus der Neutralstellung extendiert und auf einem Adapter 02 der eine sphärische Oberfläche besitzt, auf dem Grund der Vorrichtung 100 aufgestützt. Die Stützstelle sollte in der Transversalebene 3 - 8 cm (Präparat-abhängig) vor dem Humerusschaft/ Kraftangriffspunkt liegen. Auf der runden Oberfläche des Adapters 02 sollte die Hand seitlich verschoben werden bis sie eine radiale Abduktion von 20 Grad (aus der Neutralstellung) aufweist.

An der Vorrichtung 100 werden folgende Einstellungen vorgenommen: Die definierte Masse (Fallmasse) 16,6 bis 18,3 kg, die definierte Geschwindigkeit mittels Fallhöhe auf 80 bis 93 cm, die definierte Stauchung auf 20 bis 28 mm und die definierte Dämpfung durch den gedämpften Anteil der definierten Stauchung auf 6 bis 14 mm. Der Haltemechanismus 114 wird ausgelöst und die distale Radiusfraktur/ Chauffeurfraktur (bedingt) der Klassifikation 23 B1 nach AO wird mit einer Wahrscheinlichkeit von 75 % in dem Präparat 106 erzeugt.

Beispiel 5: Beispielhaftes Vorgehen zur Erzeugung einer neuen definierten Knochenfraktur in einem Präparat 106, wobei die neu definierte Knochenfraktur eine distale Radiusfraktur ist.

Geht man davon aus, dass die neue definierte Knochenfraktur bei einem Fahrradunfall erzeugt wird, bei dem eine Person mit einer Körpergröße von 165 cm und einem Körpergewicht von 50 kg vorn über auf die ausgestreckten Arme beziehungsweise Hände auf die Straße fällt, herrscht folgende Ausgangssituation:
Die Fallhöhe beträgt 155 cm und die Anfangsgeschwindigkeit ist 15 km/h.

$$E_{total} = E_{kin} + E_{pot} \tag{1}$$

$$= \frac{m}{2}v^2 + m \cdot g \cdot h \tag{2}$$

$$= \frac{50kg}{2} \cdot \left(4,16\frac{m}{s}\right)^2 + 50kg \cdot 9,81\frac{m}{s^2} \cdot 1,55m \tag{3}$$

$$= 1194J \tag{4}$$

Die Fahrradfahrerin besitzt demnach knapp 1,2 Kilojoule Energie, bevor sie auf den Boden aufprallt.

Dieses Beispiel zeigt in welchen Dimensionen sich die ersten Modellrechnungen bewegen. Dem zu Grunde liegen Beispiele von Fahrradunfällen aus der Realität. Durch das Einsetzen verschiedener Massen für die Verunfallten und verschiedene Geschwindigkeiten beim Aufprall der Verunfallten beim Sturz vom Fahrrad erhält man einen Energiebereich, der für die Erzeugung der bei einem Fahrradunfall typischen Knochenfaktur (= ausgewählte definierte Knochenfraktur mit begleitenden Weichteilverletzungen) in Frage kommt. Diese definierte Knochenfraktur, die bei einem Fahrradunfall beim Sturz über den Lenker Typisch ist, lässt sich beispielsweis nach der AO Trauma Klassifizierung, klassifizieren. Mit Hilfe der bekannten Modellrechnungen lassen sich aus der berechneten Energie beim Aufprall in dem realen Unfall und den biochemischen Parametern beim Verunfallten, z.B. der Gelenkstellung im Arm beziehungsweise der Hand des Verunfallten beim Aufprall auf die Straße die Parameter, nämlich die definierte Masse, die definierte Richtung, die definierte Geschwindigkeit der berechneten definierten Masse beim Aufprall, die definierte Geometrie des Präparats 106 in Bezug auf den berechneten Kraftstoß beim Aufprall, die definierte Stauchung des Präparats 106, die definierte Dämpfung beim Aufprall der definierten Masse berechnen beziehungsweise bestimmen.

Die Winkeleinstellungen der Gelenke werden mittels Goniometer vorgenommen und bei allen Simulationen dokumentiert. Die Einstellungen/ Vorspannungen von Varus/Valgus können auch mit Spanngurten vorgenommen werden.

Beispiel 6: Validierung der definierten Parameter

Das Präparat 106 wird in der definierten Geometrie in der Vorrichtung 100, 500 eingespannt und die Einstellungen (definierte Masse, definierte Geschwindigkeit als definierte Höhe der Fallmasse, definierte Stauchung und definierte Dämpfung) an der Vorrichtung 100, 500 vorgenommen. Die durch den Impuls beim Kraftstoß auf die Präparate übertragene Kraft wird von den drei im Schlagstempel eingesetzten Kraftmessringen (Typ 9011A Kistler, Winterthur, Schweiz) beziehungsweise Kraftsensoren gemessen. Um das oben genannte Abtasttheorem zu erfüllen und über die geringe Dauer des Kraftstoßes genug Messwerte zu erhalten, wurde das Signal der Messringe in den Versuchen mit dem Prototyp mit 100.000 Hz aufgezeichnet. Die Kraftsensoren wurden in der Transversalebene als gleichseitiges Dreieck angeordnet. Auf Grund dieser Anordnung und den einzeln ausgegebenen Kraftwerten der drei Sensoren, kann der Kraftvektor aus den Richtungsvektoren und damit der Kraftangriffspunkt nachträglich ermittelt werden. Der Kraftvektor sollte axial (in z-Richtung) durch das Präparat 106 verlaufen. Unterhalb des eingespannten Präparates wurde ein weiterer Kraftsensor (Typ 9061A, Kistler, Winterthur, Schweiz) verbaut und ebenfalls mit 100.000 Hz abgetastet. Über die Differenz der beiden Kraftsignale lässt sich die über das biologische Gewebe aufgenommene Energie abschätzen.

Zur optischen Datenerfassung der Verletzungsreihenfolge werden drei Hochgeschwindigkeitskameras 528 (Typ HCC 1000 (F) BGE, Vosskühler, Allied Vision Technologies GmbH, Stadtroda) eingesetzt. Der Bildausschnitt der Kameras ist variabel wird aber meist auf 1024 x 256 Pixel festgelegt, um die höchst mögliche Aufnahmerate von 1825 fps (frames per second) zu erreichen. Auf Grund der schnellen Krafteinleitung ergeben sich so bei den aufgenommenen Datensätzen pro Präparat 106 und Kamera 15 bis 20 Bilder zur Auswertung. Die Kameras werden bei allen Versuchen optimal zu den auf dem Präparat 106 aufgebrachten Markierungen ausgerichtet und um das Präparat 106 in ca. 120 Grad Abständen aufgestellt (FIG 5). Vor und nach den praktischen Versuchen wird für alle Kameras eine Kalibration durchgeführt. Diese dient in der späteren Bildanalyse als Skalierung der Längenverhältnisse der aufgenommenen Präparate.

**Patentansprüche**

1. Verfahren zur Erzeugung einer definierten Knochenfraktur mit begleitenden Weichteilverletzungen in einem Präparat **(106)** umfassend Knochen und Weichteilmantel, wobei zur Durchführung des Verfahrens eine Vorrichtung **(100)**, **(200)** verwendet wird, die

i. mindestens eine Führungssäule **(118), (218)**,
ii. an einem Ende der Führungssäule **(118), (218)** eine Grundplatte **(101), (201)**,
iii. eine Traverse **(109), (209)** mit Schlagstempel **(111), (211)**,
iv. mindestens einem Mittel zur Einstellung der Dämpfung beim Aufprall der definierten Masse **(110), (210)**,
v. mindestens eine Einspannplatte **(107), (207)** zur Fixierung des Präparats,
vi. eine Masse **(112), (212)** und gegebenenfalls zusätzliches Gewicht **(113), (213)** zur Einstellung einer definierten Masse,
vii. mindestens eine weitere Traverse **(115), (215)** mit mindestens einem auslösbaren Haltemechanismus **(114), (214)** zur Positionierung der definierten Masse
und Mittel zur Fixierung des Präparats **(102)** umfasst,

wobei

a) die definierte Knochenfraktur eine distale Radiusfraktur ist,
b) ein Präparat **(106)** umfassend oder bestehend aus Hand, Unterarm und Oberarm ausgewählt wird,
c) eine definierte Masse von 16,6 bis 23,1 kg eingestellt wird,
d) das Präparat **(106)** in einer definierten Geometrie in Bezug auf die Richtung, aus der die definierte Masse auf das Präparat **(106)** aufprallt, wenn der Haltemechanismus **(114), (214)** ausgelöst wird, mit Hilfe von Mitteln zur Fixierung des Präparats **(102)**, ausgerichtet wird,
wobei die Schnittfläche des Humerus zentral unter dem Kraftangriffspunkt steht, das Humeroulnargelenk aus der maximalen Streckung um 0 bis 12 Grad gebeugt wird, in dieser Position der Unterarm aus der maximalen Supination in eine Pronation von 45 bis 70 Grad gedreht wird;
e) eine definierte Geschwindigkeit, mit der die definierte Masse auf das Präparat **(106)** aufprallt, wenn der Haltemechanismus **(114) (214)** gelöst wird, mittels Fallhöhe der definierten Masse auf 76 bis 110 cm eingestellt wird,
f) eine definierte Stauchung, der das Präparat **(106)** beim Aufprall der definierten Masse ausgesetzt wird, wenn der Haltemechanismus **(114) (214)** gelöst wird, mit Mitteln zur Einstellung der Dämpfung beim Aufprall der Masse **(110), (210)** auf 20 bis 36 mm eingestellt wird,
g) eine definierte Dämpfung mit der die definierte Masse beim Aufprall auf das Präparat **(106)** abgebremst wird, wenn der Haltemechanismus **(114) (214)** gelöst wird, als gedämpfter Anteil der definierten Stauchung auf 5 bis 17 mm eingestellt wird,
h) der Haltemechanismus **(114), (214)** ausgelöst wird,
i) das Präparat **(106)** aus der Vorrichtung **(100), (200)** entfernt wird.

2. Verfahren nach Anspruch 1, wobei die distale Radiusfraktur eine distale Radiusfraktur Extension der Klassifikation 23 A2, 23 C1 - C3 (dorsal) nach AO ist und zur Ausrichtung des Präparats **(106)** in einer definierten Geometrie gemäß Verfahrensschritt d) das Humeroulnargelenk um 10 bis 12 Grad gebeugt wird, in dieser Position der Unterarm aus der maximalen Supination in eine Pronation von 60 bis 70 Grad gedreht wird, und das Handgelenk ausgehend von der Neutralstellung maximal extendiert und auf einen Griff oder Fahrradlenker aufgestützt wird.

3. Verfahren nach Anspruch 1, wobei die distale Radiusfraktur eine distale Radiusfraktur der Klassifikation 23 A2 (palmar) nach AO ist und zur Ausrichtung des Präparats **(106)** in einer definierten Geometrie gemäß Verfahrensschritt d) das Humeroulnargelenk um 10 bis 12 Grad gebeugt wird, in dieser Position der Unterarm aus der maximalen Supination in eine Pronation von 50 bis 60 Grad gedreht wird, und das Handgelenk ausgehend von der Neutralstellung um 45 - 58 Grad flektiert und auf einem flachen Untergrund gegen die Grundplatte **(101)** aufgestützt wird.

4. Verfahren nach Anspruch 1, wobei die distale Radiusfraktur eine Die-punch-Fraktur der Klassifikation 23 C1-C2 nach AO ist und zur Ausrichtung des Präparats **(106)** in einer definierten Geometrie gemäß Verfahrensschritt d) das Humeroulnargelenk um 0 bis 8 Grad gebeugt wird, in dieser Position der Unterarm aus der maximalen Supination in eine Pronation von 45 bis 52 Grad gedreht wird, und das Handgelenk in Neutralstellung gehalten und auf einem Griff oder Fahrradlenker auf der Grundplatte **(101)** aufgestützt wird.

5. Verfahren nach Anspruch 1, wobei die distale Radiusfraktur eine distale Radiusfraktur (Chauffeurfraktur) der Klassifikation 23 B1 nach AO ist und zur Ausrichtung des Präparats **(106)** in einer definierten Geometrie gemäß Verfahrensschritt d) das Humeroulnargelenk um 0 bis 8 Grad gebeugt wird, in dieser Position der Unterarm aus der maximalen Supination in eine Pronation von 45 bis 52 Grad gedreht wird, und das Handgelenk aus der Neutralstellung um 35 - 43 Grad extendiert und auf einer sphärischen Oberfläche auf dem Grund der Vorrichtung **(100)** aufgestützt wird.

6. Präparat **(106)** erhältlich durch ein Verfahren nach einem der Ansprüche 1 bis 5 umfassend oder bestehend aus Hand, Unterarm, Oberarm, Knochen und Weichteilmantel, **dadurch gekennzeichnet, dass** das Präparat **(106)** eine distale Radiusfraktur mit begleitenden Weichteilverletzungen umfasst.

7. Präparat **(106)** erhältlich durch ein Verfahren nach Anspruch 2 umfassend oder bestehend aus Hand, Unterarm, Oberarm, Knochen und Weichteilmantel, **dadurch gekennzeichnet, dass** das Präparat **(106)** eine distale Radiusfraktur Extension der Klassifikation 23 A2, 23 C1 - C3 (dorsal) nach AO mit begleitenden Weichteilverletzungen umfasst.

8. Präparat **(106)** erhältlich durch ein Verfahren nach Anspruch 3 umfassend oder bestehend aus Hand, Unterarm, Oberarm, Knochen und Weichteilmantel, **dadurch gekennzeichnet, dass** das Präparat **(106)** eine distale Radiusfraktur der Klassifikation 23 A2 (palmar) nach AO mit begleitenden Weichteilverletzungen umfasst.

9. Präparat **(106)** erhältlich durch ein Verfahren nach Anspruch 4 umfassend oder bestehend aus Hand, Unterarm, Oberarm, Knochen und Weichteilmantel, **dadurch gekennzeichnet, dass** das Präparat **(106)** eine distale Radiusfraktur Die-punch-Fraktur der Klassifikation 23 C1-C2 nach AO mit begleitenden Weichteilverletzungen umfasst.

10. Präparat **(106)** erhältlich durch ein Verfahren nach Anspruch 5 umfassend oder bestehend aus Hand, Unterarm, Oberarm, Knochen und Weichteilmantel, **dadurch gekennzeichnet, dass** das Präparat **(106)** eine distale Radiusfraktur (Chauffeurfraktur) der Klassifikation 23 B1 nach AO mit begleitenden Weichteilverletzungen umfasst.


**Claims**

1. A method for producing a defined bone fracture with accompanying soft tissue injuries in a specimen **(106)** comprising bone and soft tissue envelope, wherein for carrying out the method, use is made of an apparatus **(100), (200)** which comprises

    i. at least one guide column **(118), (218),**
    ii. at one end of the guide column **(118), (218)** a base plate **(101), (201),**
    iii. a traverse **(109), (209)** with impact punch **(111), (211),**
    iv. at least one means for adjusting the damping during the impact of the defined mass **(110), (210),**
    v. at least one clamping plate **(107), (207)** for fixing the specimen,
    vi. a mass **(112), (212)** and optionally an additional weight **(113), (213)** for adjusting a defined mass,
    vii. at least one further traverse **(115), (215)** with at least one releasable holding mechanism **(114), (214)** for positioning the defined mass
    and means for fixing the specimen **(102),**

    wherein

    a) the defined bone fracture is a distal radius fracture,
    b) a specimen **(106)** comprising or consisting of hand, forearm and upper arm is selected,
    c) a defined mass of 16.6 to 23.1 kg is adjusted,
    d) the specimen **(106)** is orientated in a defined geometry with respect to the direction from which the defined mass impacts with the specimen **(106)** when the holding mechanism **(114), (214)** is released, with the aid of means for fixing the specimen **(102),**
    wherein the cut surface of the humerus is positioned centrally under the point of attack of the force, the humeroulnar joint is flexed from maximum extension by 0 to 12 degrees, in this position the forearm is rotated from maximum supination to pronation of 45 to 70 degrees;
    e) a defined speed at which the defined mass impacts with the specimen **(106)** when the holding mechanism **(114) (214)** is released is adjusted to 76 to 110 cm by means of the falling height of the defined mass,
    f) a defined compression to which the specimen **(106)** is exposed upon impact of the defined mass when the holding mechanism **(114) (214)** is released is adjusted to 20 to 36 mm by means for adjusting the damping during the impact of the mass **(110), (210),**
    g) a defined damping with which the defined mass is braked upon impact with the specimen **(106)** when the holding mechanism **(114) (214)** is released is adjusted to 5 to 17 mm as the damped portion of the defined compression,
    h) the holding mechanism **(114), (214)** is released,

i) the specimen **(106)** is removed from the apparatus **(100)**, **(200)**.

2. The method according to claim 1, wherein the distal radius fracture is a distal radius fracture extension of classification 23 A2, 23 C1 - C3 (dorsal) according to AO and the humeroulnar joint is flexed by 10 to 12 degrees to align the specimen **(106)** in a defined geometry according to method step d), in this position, the forearm is rotated from maximum supination to pronation of 60 to 70 degrees, and the wrist is maximally extended from the neutral position and supported on a handle or bicycle handlebar.

3. The method according to claim 1, wherein the distal radius fracture is a distal radius fracture of classification 23 A2 (palmar) according to AO and the humeroulnar joint is flexed by 10 to 12 degrees to align the specimen **(106)** in a defined geometry according to method step d), in this position, the forearm is rotated from maximum supination to a pronation of 50 to 60 degrees, and the wrist is flexed 45 - 58 degrees from the neutral position and supported against the base plate **(101)** on a flat surface.

4. The method according to claim 1, wherein the distal radius fracture is a die-punch fracture of classification 23 C1-C2 according to AO and, in order to align the specimen **(106)** in a defined geometry according to method step d), the humeroulnar joint is flexed by 0 to 8 degrees, in this position the forearm is rotated from maximum supination into a pronation of 45 to 52 degrees, and the wrist is held in a neutral position and supported on a handle or bicycle handlebar on the base plate **(101)**.

5. The method according to claim 1, wherein the distal radius fracture is a distal radius fracture (chauffeur fracture) of classification 23 B1 according to AO and the humeroulnar joint is flexed by 0 to 8 degrees to align the specimen **(106)** in a defined geometry according to method step d), in this position, the forearm is rotated from maximum supination into a pronation of 45 to 52 degrees, and the wrist is extended from the neutral position by 35 - 43 degrees and supported on a spherical surface on the base of the device **(100).**

6. Specimen **(106)** obtainable by a method according to any one of claims 1 to 5 comprising or consisting of hand, forearm, upper arm, bone and soft tissue envelope, **characterised in that** the specimen **(106)** comprises a distal radius fracture with accompanying soft tissue injuries.

7. Specimen **(106)** obtainable by a method according to claim 2 comprising or consisting of hand, forearm, upper arm, bone and soft tissue envelope, **characterised in that** the specimen **(106)** comprises a distal radius fracture extension of the classification 23 A2, 23 C1 - C3 (dorsal) according to AO with accompanying soft tissue injuries.

8. Specimen **(106)** obtainable by a method according to claim 3 comprising or consisting of hand, forearm, upper arm, bone and soft tissue envelope, **characterised in that** the specimen **(106)** comprises a distal radius fracture of the classification 23 A2 (palmar) according to AO with accompanying soft tissue injuries.

9. Specimen **(106)** obtainable by a method according to claim 4 comprising or consisting of hand, forearm, humerus, bone and soft tissue envelope, **characterised in that** the specimen **(106)** comprises a distal radius fracture a die-punch fracture of the classification 23 C1-C2 according to AO with accompanying soft tissue injuries.

10. Specimen **(106)** obtainable by a method according to claim 5 comprising or consisting of hand, forearm, humerus, bone and soft tissue envelope, **characterised in that** the specimen **(106)** comprises a distal radius fracture (chauffeur fracture) of the classification 23 B1 according to AO with accompanying soft tissue injuries.

**Revendications**

1. Procédé de génération d'une fracture osseuse définie accompagnée de lésions de tissus mous dans un spécimen **(106)** comprenant os et enveloppe de tissue mous, dans lequel on utilise pour la mise en oeuvre du procédé un dispositif **(100)**, **(200)** qui comprend

   i. au moins une colonne de guidage **(118)**, **(218)**,
   ii. à une extrémité de la colonne de guidage **(118)**, **(218)**, une plaque de base **(101)**, **(201)**,
   iii. une traverse **(109)**, **(209)** avec poinçon d'impact **(111)**, **(211)**,
   iv. au moins un moyen de réglage de l'amortissement pendant l'impact de la masse définie **(110)**, **(210)**,
   v. au moins une plaque de serrage **(107)**, **(207)** pour la fixation du spécimen,

vi. une masse **(112), (212)** et éventuellement un poids supplémentaire **(113), (213)** pour ajuster une masse définie,

vii. au moins une autre traverse **(115), (215)** avec au moins un mécanisme de retenue déclenchable **(114), (214)** pour le positionnement de la masse définie,

et des moyens pour fixer le spécimen **(102),**

dans lequel

a) la fracture osseuse définie est une fracture du radius distal,

b) un spécimen **(106)** comprenant ou se composant main, avant-bras et bras est sélectionné,

c) une masse définie de 16,6 à 23,1 kg est ajustée,

d) le spécimen **(106)** est orientée selon une géométrie définie par rapport à la direction depuis laquelle la masse définie impact avec le spécimen **(106)** lorsque le mécanisme de retenue **(114), (214)** est déclenché, à l'aide de moyens de fixation de le spécimen **(102),**

la surface de coupe de l'humérus étant centrée sous le point d'application de la force, l'articulation huméro-ulnaire est fléchie de 0 à 12 degrés à partir de l'extension maximale, dans cette position l'avant-bras est tourné de la supination maximale à une pronation de 45 à 70 degrés,

e) une vitesse définie à laquelle la masse définie heurte sur le spécimen **(106)** lorsque le mécanisme de retenue **(114) (214)** est déclenché est ajustée à 76 à 110 cm au moyen de la hauteur de chute de la masse définie,

f) une compression définie, à laquelle le spécimen **(106)** est exposé lors de l'impact de la masse définie, lorsque le mécanisme de retenue déclenché **(114) (214)** est déclenché, est ajustée à 20 à 36 mm avec des moyens de réglage de l'amortissement pendant l'impact de la masse **(110), (210),**

g) un amortissement défini avec lequel la masse définie est freinée lors de l'impact avec le spécimen **(106),** lorsque le mécanisme de retenue **(114) (214)** est déclenche, est ajustée en tant que partie amortie de la compression définie à 5 à 17 mm,

h) le mécanisme de retenue **(114), (214)** est déclenché,

i) le spécimen **(106)** est retirée du dispositif **(100), (200).**

2. Procédé selon la revendication 1, dans lequel la fracture du radius distal est une fracture du radius distal en extension de la classification 23 A2, 23 C1 - C3 (dorsale) selon AO et, pour orienter le spécimen **(106)** dans une géométrie définie selon l'étape d) du procédé, l'articulation huméro-ulnaire est fléchie de 10 à 12 degrés, dans cette position, l'avant-bras est tourné de la supination maximale à une pronation de 60 à 70 degrés, et le poignet est étendu au maximum à partir de la position neutre et appuyé sur une poignée ou un guidon de vélo.

3. Procédé selon la revendication 1, dans lequel la fracture du radius distal est une fracture du radius distal de la classification 23 A2 (palmaire) selon AO et, pour orienter le spécimen **(106)** dans une géométrie définie selon l'étape d) du procédé, l'articulation huméro-ulnaire est fléchie de 10 à 12 degrés, dans cette position, l'avant-bras est tourné de la supination maximale à une pronation de 50 à 60 degrés, et le poignet est fléchi de 45 à 58 degrés à partir de la position neutre et appuyé sur un support plat contre la plaque de base **(101).**

4. Procédé selon la revendication 1, dans lequel la fracture du radius distal est une fracture de type Die-punch de la classification 23 C1-C2 selon AO et, pour orienter le spécimen **(106)** dans une géométrie définie selon l'étape d) du procédé, l'articulation huméro-ulnaire est fléchie de 0 à 8 degrés, dans cette position l'avant-bras est tourné de la supination maximale à une pronation de 45 à 52 degrés, et le poignet est maintenu en position neutre et appuyé sur une poignée ou un guidon de vélo sur la plaque de base **(101).**

5. Procédé selon la revendication 1, dans lequel la fracture du radius distal est une fracture du radius distal (fracture de Chauffeur) de la classification 23 B1 selon AO et, pour orienter le spécimen **(106)** dans une géométrie définie selon l'étape d) du procédé, l'articulation huméro-ulnaire est fléchie de 0 à 8 degrés, dans cette position, l'avant-bras est tourné de la supination maximale à une pronation de 45 à 52 degrés, et le poignet est étendu de 35 à 43 degrés à partir de la position neutre et appuyé sur une surface sphérique au fond du dispositif **(100).**

6. Spécimen **(106)** pouvant être obtenue par un procédé selon l'une quelconque des revendications 1 à 5, comprenant ou se composant main, avant-bras, bras, os et enveloppe de tissu mous, **caractérisée en ce que** la spécimen **(106)** comprend une fracture du radius distal accompagnée des lésions de tissu mous.

7. Spécimen **(106)** pouvant être obtenue par un procédé selon la revendication 2 comprenant ou se composant main, avant-bras, bras, os et enveloppe de tissu mous, **caractérisée en ce que** la spécimen **(106)** comprend une fracture du radius distal en extension de la classification 23 A2, 23 C1 - C3 (dorsale) selon AO accompagnée des lésions de tissu mous.

8. Spécimen **(106)** pouvant être obtenue par un procédé selon la revendication 3 comprenant ou se composant main, avant-bras, bras, os et enveloppe de tissu mous, **caractérisée en ce que** la spécimen **(106)** comprend une fracture du radius distal de la classification 23 A2 (palmaire) selon AO accompagnée des lésions de tissu mous.

9. Spécimen **(106)** pouvant être obtenue par un procédé selon la revendication 4 comprenant ou se composant main, avant-bras, bras, os et enveloppe de tissu mous, **caractérisée en ce que** la spécimen **(106)** comprend une fracture du radius distal Die-punch de la classification 23 C1-C2 selon AO accompagnée des lésions de tissu mous.

10. Spécimen **(106)** pouvant être obtenue par un procédé selon la revendication 5 comprenant ou se composant main, avant-bras, bras, os et enveloppe de tissu mous, **caractérisée en ce que** la spécimen **(106)** comprend une fracture du radius distal une fracture du radius distal (fracture de Chauffeur) de la classification 23 B1 selon AO accompagnée des lésions de tissu mous.

Fig. 1

Fig. 2a

Fig. 2b

EP 3 937 157 B1

Fig. 3

411

409

430

427

Fig. 4a

Fig. 4b

Fig. 5

600

Box mit
Auslöseschaltung

Steuerungs-PC

Auslösesignal

USB-Kabel

Box mit
Anschlussschaltung → Verstärker → AD/DA-Wandler

Rohsignal   Kraftsignal

Kamera 1

Kamera 2   Triggersignal

Kamera 3

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **AMIS, A. ; MILLER, J.** *Injury,* 1995, vol. 26 (3), 163-168
- **MCGINLEY, J. et al.** *The Journal of Bone and Joint Surgery,* 2003, 2403-2409
- **MCGINLEY, J. et al.** *Skeletal Radiol.,* 2006, vol. 35, 275-281
- **DELYE, H. et al.** *Journal of Neurotrauma,* 2007, vol. 24, 1576-1586
- **FITZPATRICK, M. et al.** *J. Orthop Trauma,* 2012, vol. 0 (0), 1-6
- **MASOUROS, S. et al.** *Annals of Biomedical Engineering,* 2013
- **HENDERSON, K. et al.** Biomechanical Response of the Lower Leg under High Rate Loading. *IRCOBI Conference 2013,* 2013
- **ROBERT HOLZ.** Der Mechanismus der Essex- Lopresti: Untersuchung des Gewebeversagens unter Verwendung eines neu entwickelten Simulators. Deutsche Sporthochschule, 2012
- **MARC EBINGER.** Design and evaluation of a novel simulator for high-speed injuries of the human forearm. Deutsche Sporthochschule, 2013
- **DIETER FINK.** Konzeption und Erstellung eines Softwarepakets zur Synchronisation, Datenerfassung und Messsignaldarstellung zum Simulator der Essex Lopresti. Deutsche Sporthochschule, 2012
- **WEGMANN, K. et al.** *Acta Orthopaedica,* 2014, vol. 85 (2), 177-180
- **DEBORAH R. MARTH.** *Biomechanics of the shoulder in lateral impact,* 2002
- The Comprehensive Classification of Fractures of Long Bones. **MAURICE E. MÜLLER.** Manual of Internal Fixation. Springer-Verlag, 1991, 118
- **STEFFEN RUCHHOLTZ ; DIETER CHRISTIAN WIRTZ.** Orthopädie und Unfallchirurgie Essentials. Thieme Georg Verlag, November 2012, 770
- **SCHARF, HANNS-PETER ; RÜTER, AXEL ; POHLEMANN, TIM ; MARZI, INGO ; KOHN, DIETER ; GÜNTHER, KLAUS-PETER.** Orthopädie und Unfallchirurgie, Facharztwissen nach der neuen Weiterbildungsordnung. 2011
- Pathophysiology and classification of soft tissue injuries associated with fractures. **TSCHERNE H ; OESTERN HJ.** Fractures with soft tissue injuries. Springer Verlag, 1984, 1-9
- **GEORG KASSAT.** Biomechanik für Nicht-Biomechaniker. Fitness-Contur-Verl, 1993
- **DAVID A. WINTER.** Biomechanics and Motor Control of Human Movement. Wiley, J, 2009
- **BENNO KUMMER.** Biomechanik. Dt. Ärzte-Verl, 2004
- **DIETER FINK.** *Konzeption und Erstellung eines Softwarepakets zur Synchronisation, Datenerfassung und Messsignaldarstellung zum Simulator der Essex Lopresti,* 2012
- **MARC EBINGER.** *Design and Evaluation of a novel simulator for high-speed injuries of the human forearm,* 2013
- **ROBERT HOLZ.** *Der Mechanismus der Essex- Lopresti: Untersuchung des Gewebeversagens unter Verwendung eines neu entwickelten Simulators,* 2012
- **MARC EBINGER.** *Design and evaluation of a novel simulator for high-speed injuries of the human forearm,* 2013
- **HARRY NYQUIST.** Certain Topics in Telegraph Transmission Theory. *Transactions of the American Institute of Electrical Engineers,* 1928, vol. 47
- **MICHAEL UNSER.** Sampling - 50 Years after Shannon. *Proceedings of the IEEE.,* 2000, vol. 88 (4), 569-587